# EUROPEAN PATENT APPLICATION

(11) **EP 4 429 298 A1**
(43) Date of publication of application: **11.09.2024**
(21) Application number: 21962035.8
(22) Date of filing: 01.11.2021
(51) Int. Cl.: H04W 12/37, H04W 88/04, H04W 76/14

(54) **RELAY COMMUNICATION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: HONG, Wei, Beijing 100085 (CN)
(74) Representative: Stöckeler, Ferdinand
(86) International application number: PCT/CN2021/128008
(87) International publication number: WO 2023/070685

(57) **Abstract**

Embodiments of the present disclosure provide a relay communication method. The method is performed by a first network node. The method comprises: sending security policy information to a first terminal, wherein the security policy information is at least used for, when a second terminal performs relay communication with a network by means of the first terminal, user plane security protection of relay service data transmitted between the first terminal and the second terminal on the basis of PC5.

## Description

### FIELD

The present disclosure relates to, but is not limited to, the field of wireless communication, and more particularly, to a relay communication method, a relay communication device, a communication apparatus, and a storage medium.

### BACKGROUND

A relay communication refers to that a relay function of a relay terminal can be used by a remote terminal to continue communication with a network when the remote terminal is unable to communicate with the network due to the network signal coverage or for other reasons. In a scenario, the remote terminal can transmit the data that needs to be transmitted to the network to the relay terminal first, and then the relay terminal transmits the data to the network. Alternatively, the network can transmit the data that needs to be transmitted to the remote terminal to the relay terminal first, and then the relay terminal transmits the data to the remote terminal. Thus, a communication between the remote terminal and the network is achieved.

In the related art, it is necessary to protect the security of the data transmitted between the remote terminal and the network to reduce security risks in a process of the relay communication.

### SUMMARY

Embodiments of the present disclosure disclose a relay communication method, a relay communication device, a communication apparatus, and a storage medium.

Embodiments of a first aspect of the present disclosure provide a relay communication method. The method is executed by a first network node, and includes: sending security policy information to a first terminal. The security policy information is at least configured for a user plane security protection of relay service data transmitted between the first terminal and a second terminal based on a PC5 when the second terminal performs a relay communication with a network through the first terminal.

Embodiments of a second aspect of the present disclosure provide a relay communication method. The method is executed by a first terminal, and includes: receiving security policy information sent by a first network node. The security policy information is at least configured for a user plane security protection of relay service data transmitted between the first terminal and a second terminal based on a PC5 when the second terminal performs a relay communication with a network through the first terminal.

Embodiments of a third aspect of the present disclosure provide a relay communication method. The method is executed by a second terminal, and includes: receiving security policy information sent by a first terminal. The security policy information is at least configured for a user plane security protection of relay service data transmitted between the first terminal and the second terminal based on a PC5 when the second terminal performs a relay communication with a network through the first terminal.

Embodiments of a fourth aspect of the present disclosure provide a relay communication method. The method is executed by a second network node, and includes: obtaining security policy information from a first network node. The security policy information is at least configured for a user plane security protection of relay service data transmitted between a first terminal and a second terminal based on a PC5 when the second terminal performs a relay communication with a network through the first terminal.

Embodiments of a fifth aspect of the present disclosure provide a relay communication method. The method is executed by a base station, and includes: receiving security policy information sent by a second network node. The security policy information is at least configured for a user plane security protection of relay service data transmitted between a first terminal and a second terminal based on a PC5 when the second terminal performs a relay communication with a network through the first terminal.

Embodiments of a sixth aspect of the present disclosure provide a relay communication device. The relay communication device includes: a sending module for sending security policy information to a first terminal. The security policy information is at least configured for a user plane security protection of relay service data transmitted between the first terminal and a second terminal based on a PC5 when the second terminal performs a relay communication with a network through the first terminal.

Embodiments of a seventh aspect of the present disclosure provide a relay communication device. The relay communication device includes: a receiving module for receiving security policy information sent by a first network node. The security policy information is at least configured for a user plane security protection of relay service data transmitted between a first terminal and a second terminal based on a PC5 when the second terminal performs a relay communication with a network through the first terminal.

Embodiments of an eighth aspect of the present disclosure provide a relay communication device. The relay communication device includes: a receiving module for receiving security policy information sent by a first terminal. The security policy information is at least configured for a user plane security protection of relay service data transmitted between the first terminal and a second terminal based on a PC5 when the second terminal performs a relay communication with a network through the first terminal.

Embodiments of a ninth aspect of the present disclosure provide a relay communication device. The relay communication device includes: an obtaining module for obtaining security policy information from a first network node. The security policy information is at least configured for a user plane security protection of relay service data transmitted between a first terminal and a second terminal based on a PC5 when the second terminal performs a relay communication with a network through the first terminal.

Embodiments of a tenth aspect of the present disclosure provide a relay communication device. The relay communication device includes: a receiving module for receiving security policy information sent by a second network node. The security policy information is at least configured for a user plane security protection of relay service data transmitted between a first terminal and a second terminal based on a PC5 when the second terminal performs a relay communication with a network through the first terminal.

Embodiments of an eleventh aspect of the present disclosure provide a communication apparatus, including: a processor; and a memory for storing instructions executable by the processor. The processor is configured to implement the method according to any embodiment of the present disclosure when running the executable instructions.

Embodiments of a twelfth aspect of the present disclosure provide a computer storage medium storing a computer executable program which, when executed by a processor, implements the method according to any embodiment of the present disclosure.

In the embodiments of the present disclosure, the security policy information is sent to the first terminal, and the security policy information is at least configured for the user plane security protection of the relay service data transmitted based on the PC5 between the first terminal and the second terminal when the second terminal performs the relay communication with the network through the first terminal. Thus, when the second terminal performs the relay communication with the network through the first terminal, the security protection can be performed on the user plane of the relay service data transmitted based on the PC5 between the first terminal and the second terminal based on the security policy information, which makes the transmission of the relay data between the second terminal and the network more safe, compared to a way that the security protection cannot be performed during the transmission of the relay service data.

### BRIEF DESCRIPTION OF DRAWINGS

Fig. 1 is a schematic diagram of a wireless communication system according to an embodiment.
Fig. 2 is a flow chart of a relay communication method according to an embodiment.
Fig. 3 is a flow chart of a relay communication method according to an embodiment.
Fig. 4 is a flow chart of a relay communication method according to an embodiment.
Fig. 5 is a flow chart of a relay communication method according to an embodiment.
Fig. 6 is a flow chart of a relay communication method according to an embodiment.
Fig. 7 is a flow chart of a relay communication method according to an embodiment.
Fig. 8 is a flow chart of a relay communication method according to an embodiment.
Fig. 9 is a flow chart of a relay communication method according to an embodiment.
Fig. 10 is a flow chart of a relay communication method according to an embodiment.
Fig. 11 is a flow chart of a relay communication method according to an embodiment.
Fig. 12 is a flow chart of a relay communication method according to an embodiment.
Fig. 13 is a flow chart of a relay communication method according to an embodiment.
Fig. 14 is a flow chart of a relay communication method according to an embodiment.
Fig. 15 is a flow chart of a relay communication method according to an embodiment.
Fig. 16 is a flow chart of a relay communication method according to an embodiment.
Fig. 17 is a flow chart of a relay communication method according to an embodiment.
Fig. 18 is a flow chart of a relay communication method according to an embodiment.
Fig. 19 is a flow chart of a relay communication method according to an embodiment.
Fig. 20 is a flow chart of a relay communication method according to an embodiment.
Fig. 21 is a flow chart of a relay communication method according to an embodiment.
Fig. 22 is a flow chart of a relay communication method according to an embodiment.
Fig. 23 is a flow chart of a relay communication method according to an embodiment.
Fig. 24 is a flow chart of a relay communication method according to an embodiment.
Fig. 25 is a flow chart of a relay communication method according to an embodiment.
Fig. 26 is a flow chart of a relay communication method according to an embodiment.
Fig. 27 is a flow chart of a relay communication method according to an embodiment.
Fig. 28 is a flow chart of a relay communication method according to an embodiment.
Fig. 29 is a flow chart of a relay communication method according to an embodiment.
Fig. 30 is a flow chart of a relay communication method according to an embodiment.
Fig. 31 is a flow chart of a relay communication method according to an embodiment.
Fig. 32 is a flow chart of a relay communication method according to an embodiment.
Fig. 33 is a flow chart of a relay communication method according to an embodiment.
Fig. 34 is a flow chart of a relay communication method according to an embodiment.
Fig. 35 is a flow chart of a relay communication method according to an embodiment.
Fig. 36 is a flow chart of a relay communication method according to an embodiment.
Fig. 37 is a flow chart of a relay communication method according to an embodiment.
Fig. 38 is a flow chart of a relay communication method according to an embodiment.
Fig. 39 is a schematic diagram of a relay communication device according to an embodiment.
Fig. 40 is a schematic diagram of a relay communication device according to an embodiment.
Fig. 41 is a schematic diagram of a relay communication device according to an embodiment.
Fig. 42 is a schematic diagram of a relay communication device according to an embodiment.
Fig. 43 is a schematic diagram of a relay communication device according to an embodiment.
Fig. 44 is a schematic diagram of a terminal according to an embodiment.
Fig. 45 is a block diagram of a base station according to an embodiment.

### DETAILED DESCRIPTION

Embodiments are described in detail below, and examples of the embodiments are shown in accompanying drawings. In the description with reference to the drawings, unless otherwise indicated, the same numbers in different drawings indicate the same or similar elements. The implementations described in the following embodiments do not represent all implementations consistent with the embodiments of the present disclosure. Instead, they are only examples of devices and methods consistent with some aspects of the embodiments of the present disclosure as detailed in the attached claims.

Terms used in the embodiments of the present disclosure are solely for the purpose of describing specific embodiments and are not intended to limit the embodiments of the present disclosure. The singular forms of "one" and "the" used in embodiments of the present disclosure and the attached claims are also intended to include plural forms, unless clearly indicated otherwise in the context. It should also be understood that the term "and/or" used herein refers to and includes any or all possible combinations of one or more associated listed items.

It should be understood that although terms first, second, third, etc. may be used in the embodiments of the present disclosure to describe various information, the information should not be limited to these terms. These terms are solely used to distinguish the same type of information from each other. For example, without departing from the scope of the embodiments of the present disclosure, first information may also be called second information, and similarly, second information may also be called first information. Depending on the context, the word "if' used herein can be interpreted as "when" or "as" or "in response to determining".

For the purpose of simplicity and ease of understanding, terms used herein to represent a size relationship are "greater than" or "less than". But for those skilled in the art, it can be understood that the term "greater than" also encompasses a meaning of "greater than or equal to", and the term "less than" also encompasses a meaning of "less than or equal to".

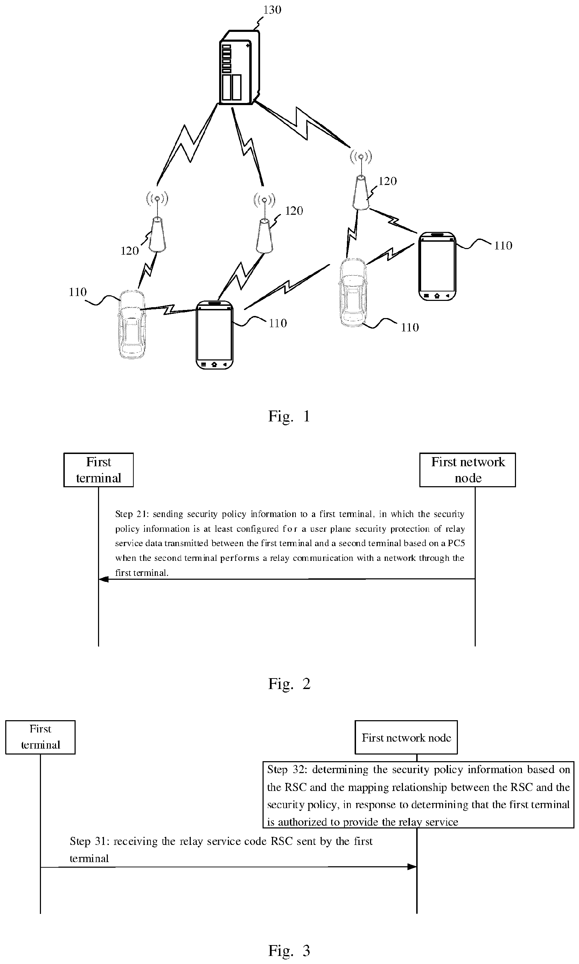

Referring to Fig. 1, Fig. 1 shows a schematic diagram of a wireless communication system according to embodiments of the present disclosure. As shown in Fig. 1, the wireless communication system is a communication system based on a mobile communication technology, in which the wireless communication system can include: a plurality of user equipment 110 and a plurality of base stations 120.

The user equipment 110 can be an apparatus that provides voice and/or data connectivity to a user. The user equipment 110 can communicate with one or more core networks through a radio access network (RAN). The user equipment 110 can be Internet of Things user equipment, such as a sensor apparatus, a mobile phone, and a computer with the Internet of Things user equipment, for example, a fixed, a portable, a pocket-sized, a handheld, a computer-integrated, or a vehicle-mounted device. For example, a station (STA), a subscriber unit, a subscriber stations, a mobile station, a mobile, a remote station, an access point, a remote terminal, an access terminal, a user terminal, a user agent, a user device, or a user equipment. Alternatively, the user equipment 110 can also be an apparatus of an unmanned aerial vehicle. Alternatively, the user equipment 110 can also be a vehicle-mounted apparatus, such as a vehicle-mounted computer with a wireless communication function, or a wireless communication apparatus connected externally to a vehicle-mounted computer. Alternatively, the user equipment 110 can also be a roadside apparatus, such as a street light, a signal light, or other roadside apparatuses with the wireless communication function.

The base station 120 can be a network side apparatus in the wireless communication system. The wireless communication system can be a 4th generation mobile communication (4G) system, also called a long term evolution (LTE) system. Alternatively, the wireless communication system can also be a 5G system, also called a new air interface system or a 5G NR system. Alternatively, the wireless communication system can also be a next generation system of the 5G system. An access network in the 5G system can be called a new generation-radio access network (NG-RAN).

The base station 120 can be an evolutional Node B (eNB) used in the 4G system. Alternatively, the base station 120 can also be a generation Node B (gNB) with a centralized distributed architecture used in the 5G system. When the base station 120 adopts the centralized distributed architecture, it usually includes a central unit (CU) and at least two distributed units (DU). The central unit is provided with a protocol stack of a packet data convergence protocol (PDCP) layer, a radio link control (RLC) layer, and a media access control (MAC) layer. The distributed unit is provided with a protocol stack of a physical (PHY) layer. The specific implementation of the base station 120 is not limited in the embodiments of the present disclosure.

A wireless connection can be established between the base station 120 and the user equipment 110 through a wireless air interface. In different implementations, the wireless air interface is a wireless air interface based on a standard of a 4th generation mobile communication network technology (4G). Alternatively, the wireless air interface is a wireless air interface based on a standard of a 5th generation mobile communication network technology (5G), such as a new air interface. Alternatively, the wireless air interface can also be a wireless air interface based on a standard of a next-generation mobile communication network technology of the 5G.

In some embodiments, an End to End (E2E) connection can also be established between the user equipment 110, for example, scenarios such as a vehicle to vehicle (V2V) communication, a vehicle to infrastructure (V2I) communication, and a vehicle to pedestrian (V2P) communication in a vehicle to everything (V2X) communication.

Here, the user equipment described above can be considered as a terminal apparatus of the following embodiments.

In some embodiments, the wireless communication system described above can also include a network management apparatus 130.

The plurality of base stations 12 are respectively connected to the network management apparatus 130. The network management apparatus 130 can be a core network apparatus in the wireless communication system, for example, the network management apparatus 130 can be a mobility management entity (MME) in an evolved packet core (EPC). Alternatively, the network management apparatus can also be other core network apparatuses, such as a serving gateway (SGW), a public data network gateway (PGW), a policy and charging rules function (PCRF), or a home subscription server (HSS), etc. The implementation form of the network management apparatus 130 is not limited in the embodiments of the present disclosure.

In order to facilitate an understanding of those skilled in the art, a plurality of implementations are listed in the embodiments of the present disclosure to clearly illustrate technical solutions of the embodiments of the present disclosure. Of course, those skilled in the art can understand that the plurality of implementations provided in the embodiments of the present disclosure can be executed separately, or can be executed together after being combined with the methods of other implementations in the embodiments of the present disclosure, or can also be executed separately or together with some methods in other related arts after being combined, which are not limited in the embodiments of the present disclosure.

In order to better understand the technical solution described in any one of the embodiments of the present disclosure, an application scenario of the relay communication in the related art is illustrated first.

In an embodiment, a solution of a control plane and a solution of a user plane are provided for relay from the user to the network. For the solution based on the user plane, a key management function (PKMF) of a 5G proximity-based service (ProSe) is configured to support a security key management of a PC5 connection of a ProSe indirect or relay communication. In LTE, to ensure a security of the LTE ProSe, the PKMF is introduced for the security key management of the ProSe indirect or relay communication. A reference point PC8, which relies on the user plane of the core network, is configured to transmit security parameters to the terminal.

In an embodiment, a policy control function (PCF) is configured to provide a PC5 policy for a ProSe direct communication during a service authorization to protect the PC5 connection. There is no solution on how to provide a PC5 security policy for the ProSe indirect or relay communication in the related art. Since a 5G PKMF is introduced to provide security parameters of the ProSe indirect or relay communication in the 5G to the terminal, the present disclosure may aim to provide the PC5 security policy to the terminal through the user plane by the 5G PKMF, so as to protect a PC5 user plane security of the ProSe relay communication. A function of the PC5 security policy is provided for the PC5 connection of the ProSe relay communication by introducing the PKMF. The 5G PKMF can correctly configure the PC5 security policy for the ProSe relay communication. The 5G PKMF can securely provide the configured PC5 security policy to a remote UE and a relay UE. The PC5 security policy on the remote UE and the relay UE can correctly activate a security protection for the requested ProSe relay service.

In an embodiment, for the ProSe indirect communication via a U2N relay, the PC5 connection needs to be established to carry a signaling and user data between the remote UE and the relay UE. A PC5 control plane security can be established during the establishment of the PC5 direct communication between the remote UE and the relay UE through a direct security mode command process.

In an embodiment, when the remote terminal requests the indirect communication from the network, the PC5 user plane security is only configured to protect ProSe service data exchanged between end-to-end terminals. Meanwhile, the PC5 user plane security is configured to protect a connection service provided by a relay terminal and requested by the remote terminal. Furthermore, a connectivity service provided by the relay terminal is configured to support the relay service provided by the network to the remote terminal through the relay terminal. Therefore, the PC5 user plane security for the ProSe relay communication needs to be consistent with a user plane security requirement of the specific relay service provided by the network. For encryption and integrity protection, there can be "REQUIRED" or "PREFERRED" or "NOT NEEDED".

In an embodiment, the PC5 control plane security is always necessary, and a PC5 control plane security policy is not need to be configured for the specific relay service requested by the remote terminal. A PC5 user plane security policy is the same with the user plane security policy set by the network for the specific relay service requested by the remote terminal.

As shown in Fig. 2, a relay communication method is provided in the embodiment, in which the method is executed by a first network node, and includes the following step.

In step 21, security policy information is sent to a first terminal.

The security policy information is at least configured for a user plane security protection of relay service data transmitted between the first terminal and a second terminal based on a PC5 when the second terminal performs a relay communication with a network through the first terminal.

Here, the network node involved in the present disclosure can be a core network element. For example, the first network node can be a PKMF. A second network node can be a session management function (SMF).

Here, the terminal involved in the present disclosure can include, but is not limited to, a mobile phone, a wearable apparatus, a vehicle-mounted terminal, a road side unit (RSU), a smart home terminal, an industrial sensing apparatus, and/or a medical apparatus.

The base station involved in the present disclosure can be an access apparatus for the terminal to access the network. Here, the base station can be of various types, such as a base station of a third generation mobile communication (3G) network, a base station of a fourth generation mobile communication (4G) network, a base station of a fifth generation mobile communication (5G) network, or other evolving base stations.

In an embodiment, the user plane security protection includes: an integrity protection and/or encryption of user plane data. For example, data transmitted between the first terminal and the second terminal needs to be subject to the integrity protection and encryption of the user plane data. It should be noted that the communication between the first terminal and the second terminal is based on a PC5 protocol.

In an embodiment, the first network node sends the security policy information to the first terminal. The first terminal will forward the security policy information to the second terminal after receiving the security policy information.

In an embodiment, the second terminal sends a direct communication request message to the first terminal. After receiving the direct communication request message, the first terminal sends a key request message to the first network node. After receiving the key request message, the first network node sends a key response message carrying the security policy information to the first terminal. After receiving the key response message, the first terminal sends a direct security mode command message carrying the security policy information to the second terminal.

Here, the first network node can determine the security policy information based on a relay service code (RSC) and a mapping relationship between the RSC and the security policy. Here, different RSCs can correspond to different security policy information. Corresponding relationships between different security policies and RSCs can be stored in the form of a list in advance. After determining a target RSC, the first network node can obtain the security policy information corresponding to the target RSC from the list by querying the list.

In an embodiment, the first network node receives the RSC sent by the first terminal. After receiving the RSC, it is determined that whether the first terminal is authorized for the relay service. If it is determined that the first terminal is authorized to provide the relay service, the security policy information is determined based on the RSC and the mapping relationship between the RSC and the security policy. It should be noted that the determination of the security policy information can be, but is not limited to, the above way.

Here, the first terminal and the second terminal, after obtaining the security policy information, can execute the security protection based on the security policy information when the data of the relay service is transmitted between the first terminal and the second terminal.

In an embodiment, the first terminal obtains a discovery parameter, a PKMF address, and a discovery security parameter from a direct discovery name management function (DDNMF). The second terminal obtains the discovery parameter, the PKMF address, and the discovery security parameter from the DDNMF. The first terminal and the second terminal can execute a discovery process based on the discovery parameter and the discovery security parameter. It should be noted that the DDNMF can be included in the first network node or deployed separately.

In the embodiments of the present disclosure, the security policy information is sent to the first terminal, and the security policy information is at least configured for the user plane security protection of the relay service data transmitted between the first terminal and the second terminal based on the PC5 when the second terminal performs the relay communication with the network through the first terminal. Thus, when the second terminal performs the relay communication with the network through the first terminal, the security protection to the user plane of the relay service date transmitted between the first terminal and the second terminal based on the PC5 can be carried out based on the security policy information, which makes the transmission of the relay data between the second terminal and the network more safe, compared to a way that the security protection cannot be performed during the transmission of the relay service data.

It should be noted that those skilled in the art can understand that the method provided in these embodiments of the present disclosure can be executed separately or together with some methods in the embodiments of the present disclosure or some methods in the related art.

As shown in Fig. 3, a relay communication method is provided in the embodiment, in which the method is executed by the first network node, and includes the following steps.

In step 31, a relay service code (RSC) sent by a first terminal is received.

In step 32, determining security policy information based on the RSC and a mapping relationship between the RSC and a security policy, in response to determining that the first terminal is authorized to provide a relay service.

In an embodiment, the first network node receives a key request message carrying the RSC sent by the first terminal. It is determined that whether the first terminal is authorized for the relay service. If it is determined that the first terminal is authorized to provide the relay service, the security policy information is determined based on the RSC and the mapping relationship between the RSC and the security policy. It should be noted that the key request message can also carry a proximity-based service relay user key (PRUK) identifier and/or a first freshness parameter.

In an embodiment, when the service type of the relay service is different, the RSC sent by the first terminal is different. Different RSCs correspond to different security policy information. In an embodiment, a first RSC corresponds to first security policy information, and a second RSC corresponds to second security policy information. When the service type of the relay service is a first service type, the RSC sent by the first terminal is the first RSC. After receiving the first RSC, the first network node can determine the security policy information as the first security policy information based on the first RSC.

It should be noted that those skilled in the art can understand that the method provided in these embodiments of the present disclosure can be executed separately or together with some methods in the embodiments of the present disclosure or some methods in the related art.

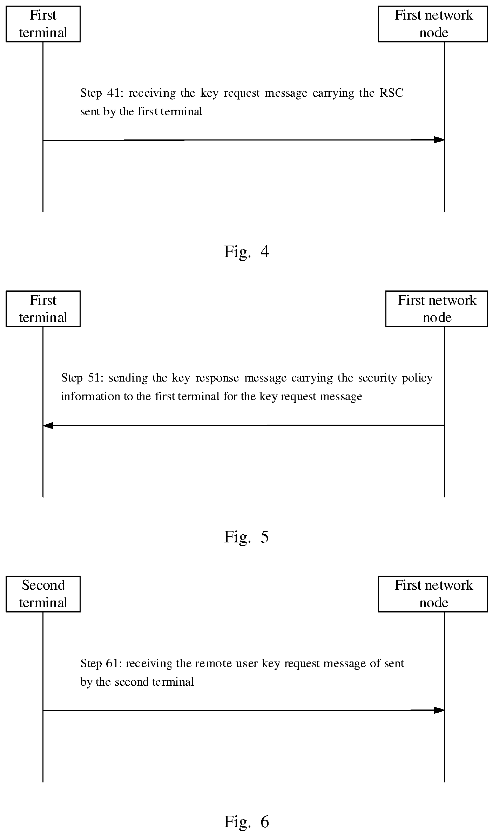

As shown in Fig. 4, a relay communication method is provided in the embodiment, in which the method is executed by the first network node, and includes the following step.

In step 41, the key request message carrying the RSC sent by the first terminal is received.

In an embodiment, the first terminal sends the key request message carrying the RSC to the first network node after receiving a direct communication request carrying the RSC from the second terminal. The direct communication request message can also carry the PRUK identifier and/or the first freshness parameter.

In an embodiment, the key request message carrying the RSC sent by the first terminal is received. It is determined that whether the first terminal is authorized for the relay service. If it is determined that the first terminal is authorized to provide the relay service, the security policy information is determined based on the RSC and the mapping relationship between the RSC and the security policy. It should be noted that the key request message can also carry the PRUK identifier and/or the first freshness parameter.

It should be noted that those skilled in the art can understand that the method provided in these embodiments of the present disclosure can be executed separately or together with some methods in the embodiments of the present disclosure or some methods in the related art.

As shown in Fig. 5, a relay communication method is provided in the embodiment, in which the method is executed by the first network node, and includes the following step.

In step 51, the key response message carrying the security policy information is sent to the first terminal for the key request message.

In an embodiment, the second terminal sends the direct communication request message to the first terminal. After receiving the direct communication request message, the first terminal sends the key request message to the first network node. After receiving the key request message, the first network node sends the key response message carrying the security policy information to the first terminal. After receiving the key response message, the first terminal sends the direct security mode command message carrying the security policy information to the second terminal. It should be noted that the key response message also carries a K_{NRP} and/or a second freshness parameter, in which the K_{NRP} is configured to generate a session key.

It should be noted that those skilled in the art can understand that the method provided in these embodiments of the present disclosure can be executed separately or together with some methods in the embodiments of the present disclosure or some methods in the related art.

As shown in Fig. 6, a relay communication method is provided in the embodiment, in which the method is executed by the first network node, and includes the following step.

In step 61, a remote user key request message sent by the second terminal is received.

Here, the remote user key request message is configured to request for obtaining the PRUK and/or a PRUK ID.

After the first network node receiving the remote user key request message sent by the second terminal, it is determined that whether the second terminal is authorized for the relay service. A message carrying the PRUK and the PRUK ID is sent to the second terminal, in response to determining that the second terminal is authorized for the relay service.

It should be noted that those skilled in the art can understand that the method provided in this embodiment of the present disclosure can be executed separately or together with some methods in the embodiments of the present disclosure or some methods in the related art.

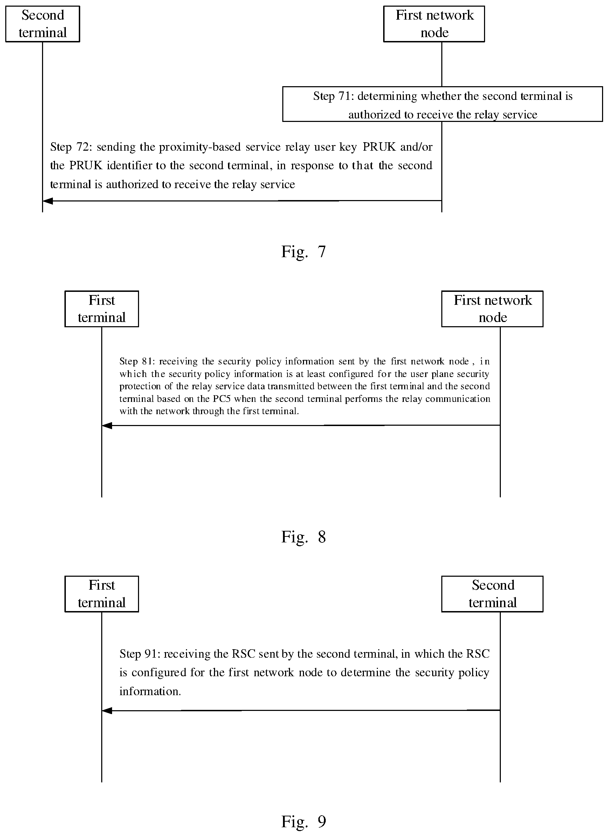

As shown in Fig. 7, a relay communication method is provided in the embodiment, in which the method is executed by the first network node, and includes the following steps.

In step 71, it is determined whether the second terminal is authorized to receive the relay service.

In step 72, the proximity-based service relay user key (PRUK) and/or the PRUK identifier are sent to the second terminal, in response to that the second terminal is authorized to receive the relay service.

In an embodiment, the remote user key request message sent by the second terminal is received. It is determined whether the second terminal is authorized to receive the relay service. The proximity-based service relay user key (PRUK) and/or the PRUK identifier are sent to the second terminal, in response to that the second terminal is authorized to receive the relay service. Alternatively, the proximity-based service relay user key (PRUK) and/or the PRUK identifier are not sent to the second terminal, in response to that the second terminal is not authorized to receive the relay service.

It should be noted that those skilled in the art can understand that the method provided in these embodiments of the present disclosure can be executed separately or together with some methods in the embodiments of the present disclosure or some methods in the related art.

As shown in Fig. 8, a relay communication method is provided in the embodiment, in which the method is executed by the first terminal, and includes the following step.

In step 81, the security policy information sent by the first network node is received.

The security policy information is at least configured for the user plane security protection of the relay service data transmitted between the first terminal and the second terminal based on the PC5 when the second terminal performs the relay communication with the network through the first terminal.

Here, the network node involved in the present disclosure can be the core network element. For example, the first network node can be the PKMF. The second network node can be the session management function (SMF).

Here, the terminal involved in the present disclosure can include, but is not limited to, the mobile phone, the wearable apparatus, the vehicle-mounted terminal, the road side unit (RSU), the smart home terminal, the industrial sensing apparatus, and/or the medical apparatus.

The base station involved in the present disclosure can be an access apparatus for the terminal to access the network. Here, the base station can be of various types, such as the base station of the third generation mobile communication (3G) network, the base station of the fourth generation mobile communication (4G) network, the base station of the fifth generation mobile communication (5G) network, or other evolving base stations.

In an embodiment, the user plane security protection includes: the integrity protection and/or the encryption of the user plane data. For example, the data transmitted between the first terminal and the second terminal needs to be subject to the integrity protection and the encryption of the user plane data. It should be noted that the communication between the first terminal and the second terminal is based on the PC5 protocol.

In an embodiment, the first network node sends the security policy information to the first terminal. The first terminal will forward the security policy information to the second terminal after receiving the security policy information.

In an embodiment, the second terminal sends the direct communication request message to the first terminal. After receiving the direct communication request message, the first terminal sends the key request message to the first network node. After receiving the key request message, the first network node sends the key response message carrying the security policy information to the first terminal. After receiving the key response message, the first terminal sends the direct security mode command message carrying the security policy information to the second terminal.

Here, the first network node can determine the security policy information based on the relay service code (RSC) and the mapping relationship between the RSC and the security policy. Here, different RSCs can correspond to different security policy information. Corresponding relationships between different security policies and RSCs can be stored in the form of a list in advance. After determining the target RSC, the first network node can obtain the security policy information corresponding to the target RSC from the list by querying the list.

In an embodiment, the first network node receives the RSC sent by the first terminal, in which the RSC is sent to the first terminal by the second terminal. After receiving the RSC, it is determined that whether the first terminal is authorized for the relay service. If it is determined that the first terminal is authorized to provide the relay service, the security policy information is determined based on the RSC and the mapping relationship between the RSC and the security policy. It should be noted that the determination of the security policy information can be, but is not limited to, the above way.

Here, the first terminal and the second terminal, after obtaining the security policy information, can perform the security protection based on the security policy information when the data of the relay service is transmitted between the first terminal and the second terminal.

In an embodiment, the first terminal obtains the discovery parameter, the PKMF address, and the discovery security parameter from the direct discovery name management function (DDNMF). The second terminal obtains the discovery parameter, the PKMF address, and the discovery security parameter from the DDNMF. The first terminal and the second terminal can execute the discovery process based on the discovery parameter and the discovery security parameter. It should be noted that the DDNMF can be included in the first network node or deployed separately.

It should be noted that those skilled in the art can understand that the method provided in these embodiments of the present disclosure can be executed separately or together with some methods in the embodiments of the present disclosure or some methods in the related art.

As shown in Fig. 9, a relay communication method is provided in the embodiment, in which the method is executed by the first terminal, and includes the following step.

In step 91, the RSC sent by the second terminal is received.

The RSC is configured for the first network node to determine the security policy information.

In an embodiment, the first terminal receives the direct communication request carrying the RSC sent by the second terminal. After receiving the direct communication request message, the first terminal sends the key request message carrying the RSC to the first network node. After receiving the key request message, the first network node sends the key response message carrying the security policy information to the first terminal. After receiving the key response message, the first terminal sends the direct security mode command message carrying the security policy information to the second terminal. It should be noted that the direct communication request can also carry the PRUK identifier and/or the first freshness parameter. The key response message also carries the K_{NRP} and/or the second freshness parameter, in which the K_{NRP} is configured to generate the session key.

Here, the first network node can determine the security policy information based on the RSC and the mapping relationship between the RSC and the security policy. Here, different RSCs can correspond to different security policy information. Corresponding relationships between different security policies and RSCs can be stored in the form of a list in advance. After determining the target RSC, the security policy information corresponding to the target RSC can be obtained from the list by querying the list.

It should be noted that those skilled in the art can understand that the method provided in these embodiments of the present disclosure can be executed separately or together with some methods in the embodiments of the present disclosure or some methods in the related art.

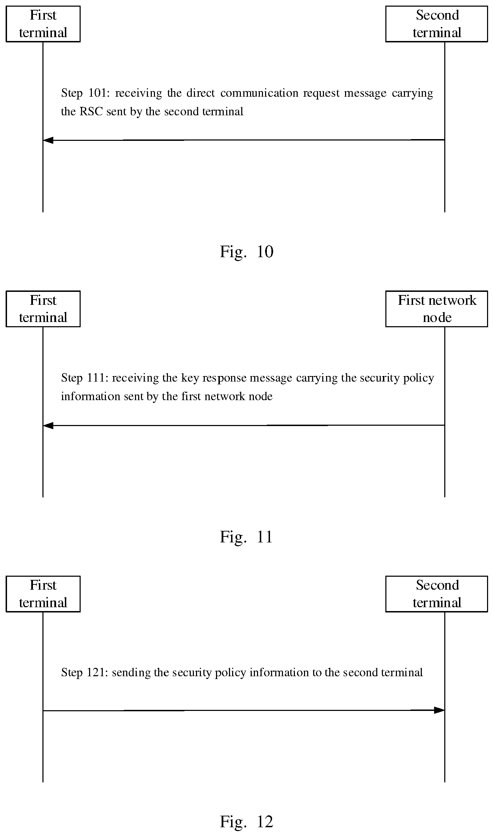

As shown in Fig. 10, a relay communication method is provided in the embodiment, in which the method is executed by the first terminal, and includes the following step.

In step 101, the direct communication request message carrying the RSC sent by the second terminal is received.

In an embodiment, the direct communication request message carrying the RSC sent by the second terminal is received. After receiving the direct communication request message, the first terminal sends the key request message carrying the RSC to the first network node. After receiving the key request message, the first network node sends the key response message carrying the security policy information to the first terminal. After receiving the key response message, the first terminal sends the direct security mode command message carrying the security policy information to the second terminal. It should be noted that the direct communication request can also carry the PRUK identifier and/or the first freshness parameter. The key response message also carries the K_{NRP} and/or the second freshness parameter, in which the K_{NRP} is configured to generate the session key.

It should be noted that those skilled in the art can understand that the method provided in these embodiments of the present disclosure can be executed separately or together with some methods in the embodiments of the present disclosure or some methods in the related art.

A relay communication method is provided in the embodiment, in which the method is executed by the first terminal, and includes: sending the RSC to the first network node.

Here, the key request message carrying the RSC can be sent to the first network node. In an embodiment, the key request message also carries the PRUK identifier and/or the first freshness parameter.

As shown in Fig. 11, a relay communication method is provided in the embodiment, in which the method is executed by the first terminal, and includes the following step.

In step 111, the key response message carrying the security policy information sent by the first network node is received.

In an embodiment, the first network node sends the key response message carrying the security policy information to the first terminal after receiving the key request message. After receiving the key response message, the first terminal sends the direct security mode command message carrying the security policy information to the second terminal. It should be noted that the key response message also carries the K_{NRP} and/or the second freshness parameter, in which the K_{NRP} is configured to generate the session key.

It should be noted that those skilled in the art can understand that the method provided in these embodiments of the present disclosure can be executed separately or together with some methods in the embodiments of the present disclosure or some methods in the related art.

As shown in Fig. 12, a relay communication method is provided in the embodiment, in which the method is executed by the first terminal, and includes the following step.

In step 121, the security policy information is sent to the second terminal.

In an embodiment, the second terminal sends the direct communication request message to the first terminal. After receiving the direct communication request message, the first terminal sends the key request message to the first network node. After receiving the key request message, the first network node sends the key response message carrying the security policy information to the first terminal. After receiving the key response message, the first terminal sends the direct security mode command message carrying the security policy information to the second terminal. Here, the first terminal and the second terminal, after obtaining the security policy information, can perform the security protection based on the security policy information when the data of the relay service is transmitted between the first terminal and the second terminal.

It should be noted that those skilled in the art can understand that the method provided in these embodiments of the present disclosure can be executed separately or together with some methods in the embodiments of the present disclosure or some methods in the related art.

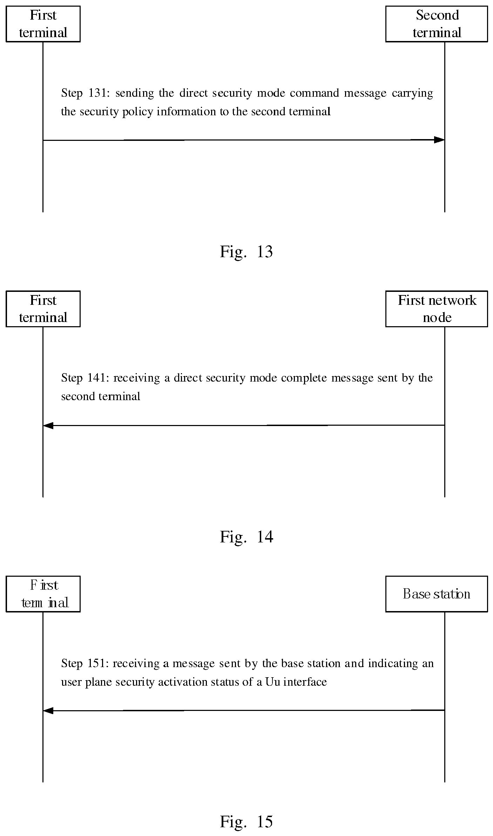

As shown in Fig. 13, a relay communication method is provided in the embodiment, in which the method is executed by the first terminal, and includes the following step.

In step 131, the direct security mode command message carrying the security policy information is sent to the second terminal.

In an embodiment, the second terminal sends the direct communication request message to the first terminal. After receiving the direct communication request message, the first terminal sends the key request message to the first network node. After receiving the key request message, the first network node sends the key response message carrying the security policy information to the first terminal. After receiving the key response message, the first terminal sends the direct security mode command message carrying the security policy information to the second terminal. Here, the first terminal and the second terminal, after obtaining the security policy information, can perform the security protection based on the security policy information when the data of the relay service is transmitted between the first terminal and the second terminal.

It should be noted that the direct security mode command message also carries the K_{NRP} and/or the second freshness parameter, in which the K_{NRP} is configured to generate the session key. In an embodiment, the integrity protection of the security mode command message is performed through the session key generated based on the K_{NRP}.

It should be noted that those skilled in the art can understand that the method provided in these embodiments of the present disclosure can be executed separately or together with some methods in the embodiments of the present disclosure or some methods in the related art.

As shown in Fig. 14, a relay communication method is provided in the embodiment, in which the method is executed by the first terminal, and includes the following step.

In step 141, a direct security mode complete message sent by the second terminal is received.

In an embodiment, the direct security mode command message carrying the security policy information is sent to the second terminal, in which the direct security mode command message also carries the K_{NRP} and/or the second freshness parameter. The integrity protection of the security mode command message is performed through the session key generated based on the K_{NRP}. After the second terminal receives the direct security mode command message, the integrity of the direct security mode command message is verified. In response to the successful verification of the integrity, it is determined that the first terminal is authorized to provide the relay service, and the direct security mode complete message is sent to the first terminal.

It should be noted that the direct security mode command message also carries the K_{NRP} and/or the second freshness parameter, in which the K_{NRP} is configured to generate the session key. In an embodiment, the integrity protection of the security mode command message is performed through the session key generated based on the K_{NRP}.

It should be noted that those skilled in the art can understand that the method provided in these embodiments of the present disclosure can be executed separately or together with some methods in the embodiments of the present disclosure or some methods in the related art.

As shown in Fig. 15, a relay communication method is provided in the embodiment, in which the method is executed by the first terminal, and includes the following step.

In step 151, a message sent by the base station and indicating a user plane security activation status of a Uu interface is received.

In an embodiment, the base station can receive the security policy information sent by the second network node and activate the user plane security protection of the Uu interface based on the security policy information. The message indicating the user plane security activation status of the Uu interface is sent to the first terminal. After receiving the message indicating the user plane security activation status of the Uu interface sent by the base station, the first terminal determines whether the user plane security activation status of the Uu interface matches with the security policy indicated by the security policy information provided by the first network node. The user plane security protection of the Uu interface and/or PC5 interface is activated, in response to that the user plane security activation status of the Uu interface matches with the security policy indicated by the security policy information provided by the first network node. Alternatively, a response message indicating an error is sent to the base station, in response to that the user plane security activation status of the Uu interface does not match with the security policy information.

It should be noted that those skilled in the art can understand that the method provided in these embodiments of the present disclosure can be executed separately or together with some methods in the embodiments of the present disclosure or some methods in the related art.

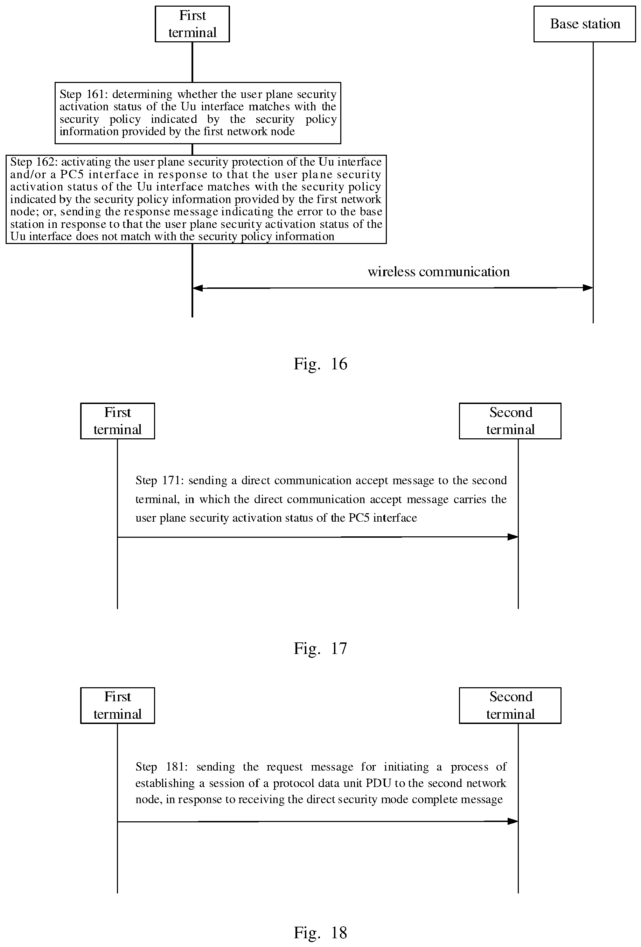

As shown in Fig. 16, a relay communication method is provided in the embodiment, in which the method is executed by the first terminal, and includes the following steps.

In step 161, it is determined whether the user plane security activation status of the Uu interface matches with the security policy indicated by the security policy information provided by the first network node.

In step 162, the user plane security protection of the Uu interface and/or the PC5 interface is activated in response to that the user plane security activation status of the Uu interface matches with the security policy indicated by the security policy information provided by the first network node; or, the response message indicating the error is sent to the base station, in response to that the user plane security activation status of the Uu interface does not match with the security policy information.

It should be noted that those skilled in the art can understand that the method provided in these embodiments of the present disclosure can be executed separately or together with some methods in the embodiments of the present disclosure or some methods in the related art.

As shown in Fig. 17, a relay communication method is provided in the embodiment, in which the method is executed by the first terminal, and includes the following step.

In step 171, a direct communication accept message is sent to the second terminal, in which the direct communication accept message carries the user plane security activation status of the PC5 interface.

In an embodiment, the first terminal sends the direct communication accept message to the second terminal, in which the direct communication accept message carries the user plane security activation status of the PC5 interface. The second terminal determines whether the user plane security activation status of the PC5 interface matches with the security policy indicated by the security policy information. The user plane security protection of the PC5 interface is activated by the second terminal, in response to that the user plane security activation status of the PC5 interface matches with the security policy indicated by the security policy information. Or, the second terminal sends the response message indicating the error to the first terminal, in response to that the user plane security activation status of the PC5 interface does not match with the security policy indicated by the security policy information.

It should be noted that those skilled in the art can understand that the method provided in these embodiments of the present disclosure can be executed separately or together with some methods in the embodiments of the present disclosure or some methods in the related art.

As shown in Fig. 18, a relay communication method is provided in the embodiment, in which the method is executed by the first terminal, and includes the following step.

In step 181, a request message for initiating a process of establishing a session of a protocol data unit (PDU) is sent to the second network node, in response to receiving the direct security mode complete message.

In an embodiment, the request message for initiating the process of establishing the session of the protocol data unit (PDU) is sent to the second network node, in response to receiving the direct security mode complete message. The second network node obtains the security policy information from the first network node, in response to receiving the request message for initiating the process of establishing the session of the protocol data unit (PDU) sent by the first terminal. The security policy indicated by the security policy information is set as the user plane security policy of the session of the PDU requested by the first terminal.

It should be noted that those skilled in the art can understand that the method provided in these embodiments of the present disclosure can be executed separately or together with some methods in the embodiments of the present disclosure or some methods in the related art.

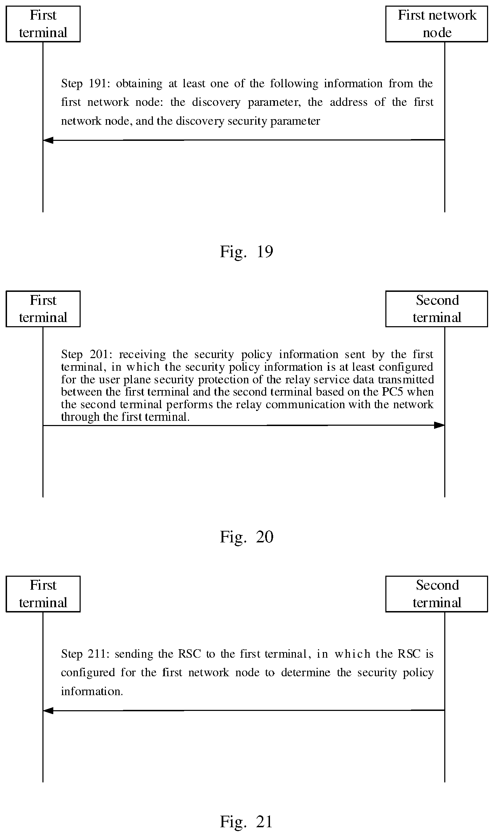

As shown in Fig. 19, a relay communication method is provided in the embodiment, in which the method is executed by the first terminal, and includes the following step.

In step 191, at least one of the discovery parameter, the address of the first network node, and the discovery security parameter is obtained from the first network node.

In an embodiment, the first terminal obtains the discovery parameter, the PKMF address, and the discovery security parameter from the direct discovery name management function. The second terminal obtains the discovery parameter, the PKMF address, and the discovery security parameter from the DDNMF. The first terminal and the second terminal can execute the discovery process based on the discovery parameter and the discovery security parameter. It should be noted that the DDNMF can be included in the first network node or deployed separately.

It should be noted that those skilled in the art can understand that the method provided in these embodiments of the present disclosure can be executed separately or together with some methods in the embodiments of the present disclosure or some methods in the related art.

As shown in Fig. 20, a relay communication method is provided in the embodiment, in which the method is executed by the second terminal, and includes the following step.

In step 201, the security policy information sent by the first terminal is received.

The security policy information is at least configured for the user plane security protection of the relay service data transmitted between the first terminal and the second terminal based on the PC5 when the second terminal performs the relay communication with the network through the first terminal.

Here, the network node involved in the present disclosure can be the core network element. For example, the first network node can be the PKMF. The second network node can be the session management function (SMF).

Here, the terminal involved in the present disclosure can include, but is not limited to, the mobile phone, the wearable apparatus, the vehicle-mounted terminal, the road side unit (RSU), the smart home terminal, the industrial sensing apparatus, and/or the medical apparatus.

The base station involved in the present disclosure can be the access apparatus for the terminal to access the network. Here, the base station can be of various types, such as the base station of the third generation mobile communication (3G) network, the base station of the fourth generation mobile communication (4G) network, the base station of the fifth generation mobile communication (5G) network, or other evolving base stations.

In an embodiment, the user plane security protection includes the integrity protection and/or the encryption of the user plane data. For example, the data transmitted between the first terminal and the second terminal needs to be subject to the integrity protection and the encryption of the user plane data. It should be noted that the communication between the first terminal and the second terminal is based on the PC5 protocol.

In an embodiment, the first network node sends the security policy information to the first terminal. The first terminal will forward the security policy information to the second terminal after receiving the security policy information.

In an embodiment, the second terminal sends the direct communication request message to the first terminal. After receiving the direct communication request message, the first terminal sends the key request message to the first network node. After receiving the key request message, the first network node sends the key response message carrying the security policy information to the first terminal. After receiving the key response message, the first terminal sends the direct security mode command message carrying the security policy information to the second terminal.

Here, the first network node can determine the security policy information based on the relay service code (RSC) and the mapping relationship between the RSC and the security policy. Here, different RSCs can correspond to different security policy information. Corresponding relationships between different security policies and RSCs can be stored in the form of a list in advance. After determining the target RSC, the first network node can obtain the security policy information corresponding to the target RSC from the list by querying the list.

In an embodiment, the first network node receives the RSC sent by the first terminal. After receiving the RSC, it is determined whether the first terminal is authorized for the relay service. If it is determined that the first terminal is authorized to provide the relay service, the security policy information is determined based on the RSC and the mapping relationship between the RSC and the security policy. It should be noted that the determination of the security policy information can be, but is not limited to, the above way.

Here, the first terminal and the second terminal, after obtaining the security policy information, can perform the security protection based on the security policy information when the data of the relay service is transmitted between the first terminal and the second terminal.

In an embodiment, the first terminal obtains the discovery parameter, the PKMF address, and the discovery security parameter from the direct discovery name management function (DDNMF). The second terminal obtains the discovery parameter, the PKMF address, and the discovery security parameter from the DDNMF. The first terminal and the second terminal can execute the discovery process based on the discovery parameter and the discovery security parameter. It should be noted that the DDNMF can be included in the first network node or deployed separately.

It should be noted that those skilled in the art can understand that the method provided in these embodiments of the present disclosure can be executed separately or together with some methods in the embodiments of the present disclosure or some methods in the related art.

As shown in Fig. 21, a relay communication method is provided in the embodiment, in which the method is executed by the second terminal, and includes the following step.

In step 211, the RSC is sent to the first terminal.

The RSC is configured for the first network node to determine the security policy information.

In an embodiment, the second terminal sends the RSC to the first terminal. The first terminal sends the key request message carrying the RSC to the first network node. It is determined that whether the first terminal is authorized for the relay service. If it is determined that the first terminal is authorized to provide the relay service, the security policy information is determined based on the RSC and the mapping relationship between the RSC and the security policy. It should be noted that the key request message can also carry the proximity-based service relay user key (PRUK) and/or the first freshness parameter.

In an embodiment, when the service type of the relay service is different, the RSC sent by the first terminal is different. Different RSCs correspond to different security policy information. In an embodiment, the first RSC corresponds to the first security policy information, and the second RSC corresponds to the second security policy information. When the service type of the relay service is the first service type, the RSC sent by the first terminal is the first RSC. After receiving the first RSC, the first network node can determine the security policy information as the first security policy information based on the first RSC.

It should be noted that those skilled in the art can understand that the method provided in these embodiments of the present disclosure can be executed separately or together with some methods in the embodiments of the present disclosure or some methods in the related art.

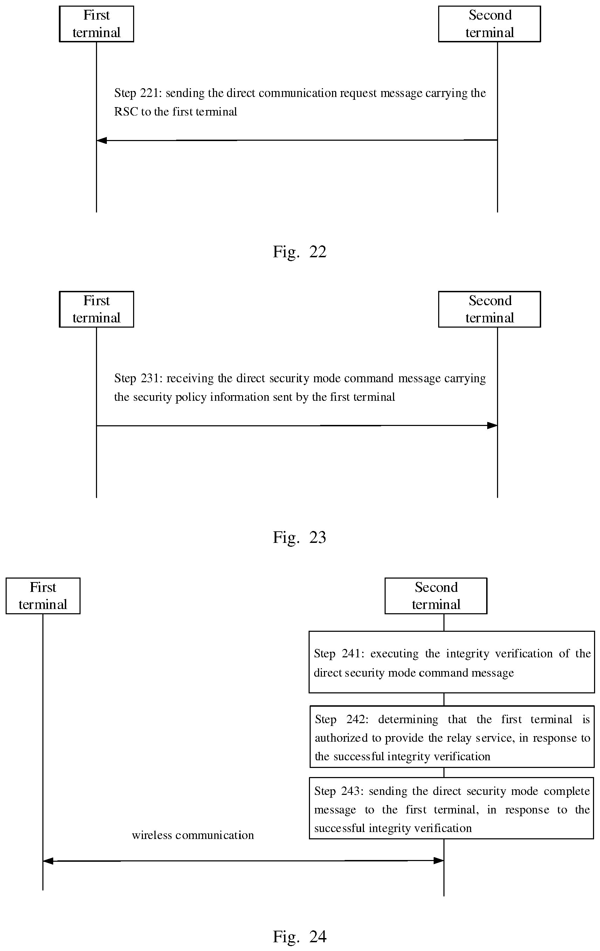

As shown in Fig. 22, a relay communication method is provided in the embodiment, in which the method is executed by the second terminal, and includes the following step.

In step 221, the direct communication request message carrying the RSC is sent to the first terminal.

In an embodiment, the direct communication request message also carries the PRUK identifier and/or the first freshness parameter.

It should be noted that those skilled in the art can understand that the method provided in theses embodiments of the present disclosure can be executed separately or together with some methods in the embodiments of the present disclosure or some methods in the related art.

As shown in Fig. 23, a relay communication method is provided in the embodiment, in which the method is executed by the second terminal, and includes the following step.

In step 231, the direct security mode command message carrying the security policy information sent by the first terminal is received.

In an embodiment, the second terminal sends the direct communication request message to the first terminal. After receiving the direct communication request message, the first terminal sends the key request message to the first network node. After receiving the key request message, the first network node sends the key response message carrying the security policy information to the first terminal. After receiving the key response message, the first terminal sends the direct security mode command message carrying the security policy information to the second terminal. Here, the first terminal and the second terminal, after obtaining the security policy information, can perform the security protection based on the security policy information when the data of the relay service is transmitted between the first terminal and the second terminal.

It should be noted that the direct security mode command message also carries the K_{NRP} and/or the second freshness parameter, in which the K_{NRP} is configured to generate the session key. In an embodiment, the integrity protection of the security mode command message is performed through the session key generated based on the K_{NRP}.

It should be noted that those skilled in the art can understand that the method provided in these embodiments of the present disclosure can be executed separately or together with some methods in the embodiments of the present disclosure or some methods in the related art.

As shown in Fig. 24, a relay communication method is provided in the embodiment, in which the method is executed by the second terminal, and includes the following steps.

In step 241, the integrity verification of the direct security mode command message is executed.

In step 242, it is determined that the first terminal is authorized to provide the relay service, in response to the successful integrity verification.

In step 243, the direct security mode complete message is sent to the first terminal, in response to the successful integrity verification.

In an embodiment, the first terminal sends the direct security mode command message carrying the security policy information to the second terminal, in which the direct security mode command message also carries the K_{NRP} and/or the second freshness parameter. The integrity protection of the security mode command message is performed through the session key generated based on the K_{NRP}. After the second terminal receives the direct security mode command message, the integrity verification of the direct security mode command message is executed. It is determined that the first terminal is authorized to provide the relay service, in response to the successful integrity verification, and the direct security mode complete message is sent to the first terminal.

It should be noted that the direct security mode command message also carries the K_{NRP} and/or the second freshness parameter, in which the K_{NRP} is configured to generate the session key. In an embodiment, the integrity protection of the security mode command message is performed through the session key generated based on the K_{NRP}.

It should be noted that those skilled in the art can understand that the method provided in these embodiments of the present disclosure can be executed separately or together with some methods in the embodiments of the present disclosure or some methods in the related art.

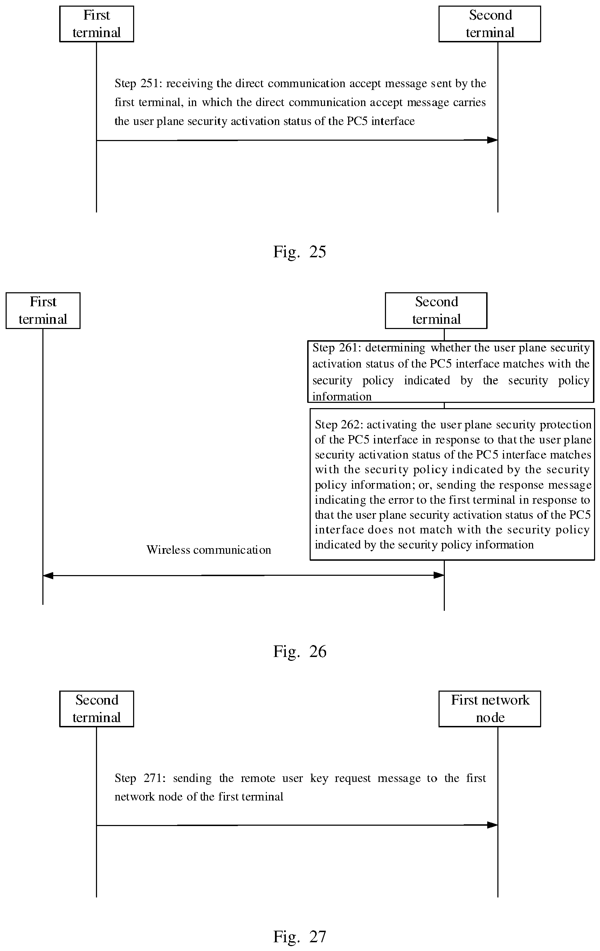

As shown in Fig. 25, a relay communication method is provided in the embodiment, in which the method is executed by the second terminal, and includes the following step.

In step 251, the direct communication accept message sent by the first terminal is received, in which the direct communication accept message carries the user plane security activation status of the PC5 interface.

In an embodiment, the base station can receive the security policy information sent by the second network node and activate the user plane security protection of the Uu interface based on the security policy information. The message indicating the user plane security activation status of the Uu interface is sent to the first terminal. After receiving the message sent by the base station and indicating the user plane security activation status of the Uu interface, the first terminal determines whether the user plane security activation status of the Uu interface matches with the security policy indicated by the security policy information provided by the first network node. The user plane security protection of the Uu interface and/or the PC5 interface is activated, in response to that the user plane security activation status of the Uu interface matches with the security policy indicated by the security policy information provided by the first network node. Or, the response message indicating the error is sent to the base station, in response to that the user plane security activation status of the Uu interface does not match with the security policy information.

It should be noted that those skilled in the art can understand that the method provided in these embodiments of the present disclosure can be executed separately or together with some methods in the embodiments of the present disclosure or some methods in the related art.

As shown in Fig. 26, a relay communication method is provided in the embodiment, in which the method is executed by the second terminal, and includes the following steps.

In step 261, it is determined whether the user plane security activation status of the PC5 interface matches with the security policy indicated by the security policy information.

In step 262, the user plane security protection of the PC5 interface is activated, in response to that the user plane security activation status of the PC5 interface matches with the security policy indicated by the security policy information; or, the response message indicating the error is sent to the first terminal, in response to that the user plane security activation status of the PC5 interface does not match with the security policy indicated by the security policy information.

It should be noted that those skilled in the art can understand that the method provided in this embodiment of the present disclosure can be executed separately or together with some methods in the embodiments of the present disclosure or some methods in the related art.

As shown in Fig. 27, a relay communication method is provided in the embodiment, in which the method is executed by the second terminal, and includes the following step.

In step 271, the remote user key request message is sent to the first network node of the first terminal.

Here, the remote user key request message is configured to request for obtaining the PRUK and/or the PRUK ID.

After the first network node receives the remote user key request message sent by the second terminal, it is determined that whether the second terminal is authorized for the relay service. The message carrying the PRUK and the PRUK ID is sent to the second terminal, in response to determining that the second terminal is authorized for the relay service.

It should be noted that those skilled in the art can understand that the method provided in this embodiment of the present disclosure can be executed separately or together with some methods in the embodiments of the present disclosure or some methods in the related art.

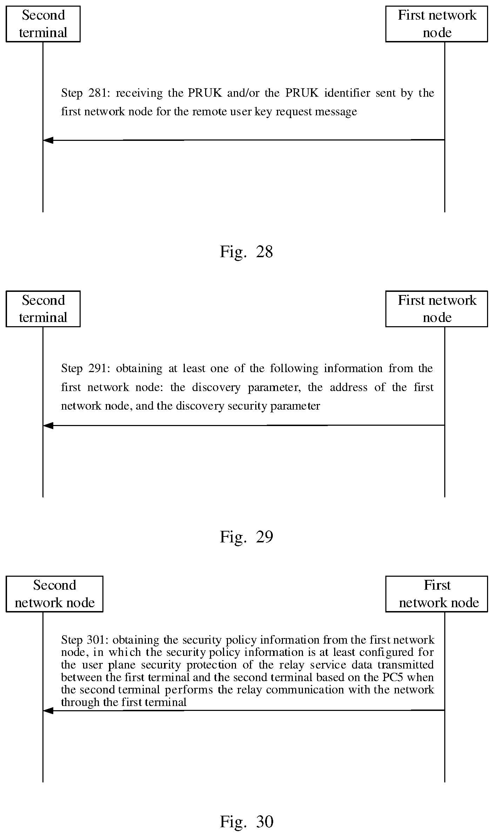

As shown in Fig. 28, a relay communication method is provided in the embodiment, in which the method is executed by the second terminal, and includes the following step.

In step 281, the PRUK and/or the PRUK identifier sent by the first network node for the remote user key request message are received.

In an embodiment, the remote user key request message sent by the second terminal is received. It is determined that whether the second terminal is authorized to receive the relay service. The proximity-based service relay user key (PRUK) and/or the PRUK identifier are sent to the second terminal, in response to that the second terminal is authorized to receive the relay service. Or, the proximity-based service relay user key (PRUK) and/or the PRUK identifier are not sent to the second terminal, in response to that the second terminal is not authorized to receive the relay service.

It should be noted that those skilled in the art can understand that the method provided in these embodiments of the present disclosure can be executed separately or together with some methods in the embodiments of the present disclosure or some methods in the related art.

As shown in Fig. 29, a relay communication method is provided in the embodiment, in which the method is executed by the second terminal, and includes the following step.

In step 291, at least one of the discovery parameter, the address of the first network node, and the discovery security parameter is obtained from the first network node.

In an embodiment, the first terminal obtains the discovery parameter, the PKMF address, and the discovery security parameter from the direct discovery name management function. The second terminal obtains the discovery parameter, the PKMF address, and the discovery security parameter from the DDNMF. The first terminal and the second terminal can execute the discovery process based on the discovery parameter and the discovery security parameter. It should be noted that the DDNMF can be included in the first network node or deployed separately.

It should be noted that those skilled in the art can understand that the method provided in these embodiments of the present disclosure can be executed separately or together with some methods in the embodiments of the present disclosure or some methods in the related art.

As shown in Fig. 30, a relay communication method is provided in the embodiment, in which the method is executed by the second network node, and includes the following step.

In step 301, the security policy information is obtained from the first network node.

The security policy information is at least configured for the user plane security protection of the relay service data transmitted between the first terminal and the second terminal based on the PC5 when the second terminal performs the relay communication with the network through the first terminal.

Here, the network node involved in the present disclosure can be the core network element. For example, the first network node can be the PKMF. The second network node can be the session management function (SMF).

Here, the terminal involved in the present disclosure can include, but is not limited to, the mobile phone, the wearable apparatus, the vehicle-mounted terminal, the road side unit (RSU), the smart home terminal, the industrial sensing apparatus, and/or the medical apparatus.

The base station involved in the present disclosure can be the access apparatus for the terminal to access the network. Here, the base station can be of various types, such as the base station of the third generation mobile communication (3G) network, the base station of the fourth generation mobile communication (4G) network, the base station of the fifth generation mobile communication (5G) network, or other evolving base stations.

In an embodiment, the user plane security protection includes the integrity protection and/or the encryption of the user plane data. For example, the data transmitted between the first terminal and the second terminal needs to be subject to the integrity protection and the encryption of the user plane data. It should be noted that the communication between the first terminal and the second terminal is based on the PC5 protocol.

In an embodiment, the first network node sends the security policy information to the first terminal. The first terminal will forward the security policy information to the second terminal after receiving the security policy information.

In an embodiment, the second terminal sends the direct communication request message to the first terminal. After receiving the direct communication request message, the first terminal sends the key request message to the first network node. After receiving the key request message, the first network node sends the key response message carrying the security policy information to the first terminal. After receiving the key response message, the first terminal sends the direct security mode command message carrying the security policy information to the second terminal.

Here, the first network node can determine the security policy information based on the relay service code (RSC) and the mapping relationship between the RSC and the security policy. Here, different RSCs can correspond to different security policy information. Corresponding relationships between different security policies and RSCs can be stored in the form of a list in advance. After determining the target RSC, the first network node can obtain the security policy information corresponding to the target RSC from the list by querying the list.

In an embodiment, the first network node receives the RSC sent by the first terminal. After receiving the RSC, it is determined whether the first terminal is authorized for the relay service. If it is determined that the first terminal is authorized to provide the relay service, the security policy information is determined based on the RSC and the mapping relationship between the RSC and the security policy. It should be noted that the determination of the security policy information can be, but is not limited to, the above way.

Here, the first terminal and the second terminal, after obtaining the security policy information, can perform the security protection based on the security policy information when the data of the relay service is transmitted between the first terminal and the second terminal.

In an embodiment, the first terminal obtains the discovery parameter, the PKMF address, and the discovery security parameter from the direct discovery name management function (DDNMF). The second terminal obtains the discovery parameter, the PKMF address, and the discovery security parameter from the DDNMF. The first terminal and the second terminal can execute the discovery process based on the discovery parameter and the discovery security parameter. It should be noted that the DDNMF can be included in the first network node or deployed separately.

It should be noted that those skilled in the art can understand that the method provided in these embodiments of the present disclosure can be executed separately or together with some methods in the embodiments of the present disclosure or some methods in the related art.

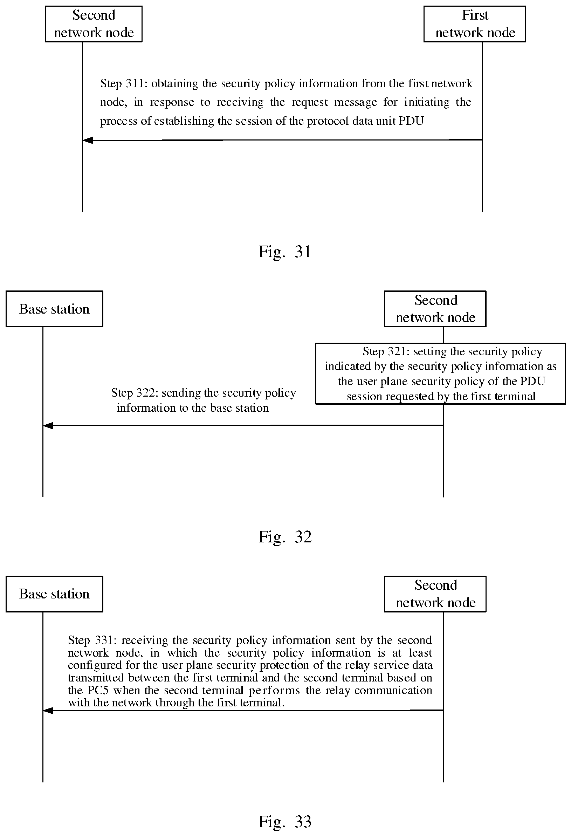

As shown in Fig. 31, a relay communication method is provided in the embodiment, in which the method is executed by the second network node, and includes the following step.

In step 311, the security policy information is obtained from the first network node, in response to receiving the request message sent by the first terminal and for initiating the process of establishing the session of the protocol data unit (PDU).

In an embodiment, the first terminal sends the request message for initiating the process of establishing the session of the protocol data unit (PDU) to the second network node, in response to receiving the direct security mode complete message. The second network node obtains the security policy information from the first network node, in response to receiving the request message sent by the first terminal and for initiating the process of establishing the session of the protocol data unit (PDU). The security policy indicated by the security policy information is set as the user plane security policy of the session of the PDU requested by the first terminal.

It should be noted that those skilled in the art can understand that the method provided in these embodiments of the present disclosure can be executed separately or together with some methods in the embodiments of the present disclosure or some methods in the related art.

As shown in Fig. 32, a relay communication method is provided in the embodiment, in which the method is executed by the second network node, and includes the following steps.

In step 321, the security policy indicated by the security policy information is set as the user plane security policy of the session of the PDU requested by the first terminal.

In step 322, the security policy information is sent to the base station.

In an embodiment, the request message for initiating the process of establishing the session of the protocol data unit (PDU) is sent to the second network node, in response to receiving the direct security mode complete message. The second network node obtains the security policy information from the first network node, in response to receiving the request message sent by the first terminal and for initiating the process of establishing the session of the protocol data unit (PDU). The security policy indicated by the security policy information is set as the user plane security policy of the session of the PDU requested by the first terminal. The security policy information is sent to the base station.

It should be noted that those skilled in the art can understand that the method provided in these embodiments of the present disclosure can be executed separately or together with some methods in the embodiments of the present disclosure or some methods in the related art.

As shown in Fig. 33, a relay communication method is provided in the embodiment, in which the method is executed by the base station, and includes the following step.

In step 331, receiving the security policy information sent by the second network node.

The security policy information is at least configured for the user plane security protection of the relay service data transmitted between the first terminal and the second terminal based on the PC5 when the second terminal performs the relay communication with the network through the first terminal.

In an embodiment, the request message for initiating the process of establishing the session of the protocol data unit (PDU) is sent to the second network node, in response to receiving the direct security mode complete message. The second network node obtains the security policy information from the first network node, in response to receiving the request message sent by the first terminal and for initiating the process of establishing the session of the protocol data unit (PDU). The security policy indicated by the security policy information is set as the user plane security policy of the session of the PDU requested by the first terminal. The security policy information is sent to the base station. After receiving the security policy information, the base station activates the user plane security protection of the Uu interface based on the security policy information.

In an embodiment, the base station also sends the message indicating the user plane security activation status of the Uu interface to the first terminal. After receiving the message indicating the user plane security activation status of the Uu interface sent from the base station, the first terminal determines whether the user plane security activation status of the Uu interface matches with the security policy indicated by the security policy information provided by the first network node. The user plane security protection of the Uu interface and/or the PC5 interface is activated, in response to that the user plane security activation status of the Uu interface matches with the security policy indicated by the security policy information provided by the first network node. Or, the response message indicating the error is sent to the base station, in response to that the user plane security activation status of the Uu interface does not match with the security policy information.

It should be noted that those skilled in the art can understand that the method provided in these embodiments of the present disclosure can be executed separately or together with some methods in the embodiments of the present disclosure or some methods in the related art.

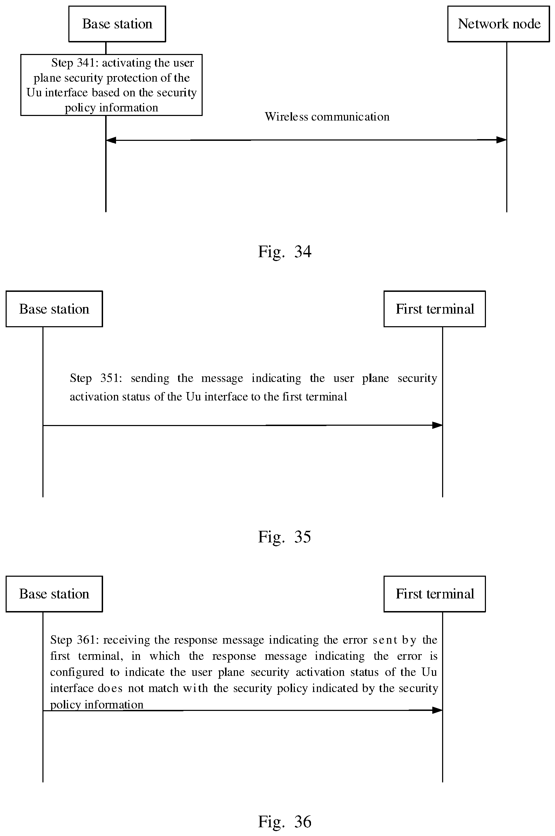

As shown in Fig. 34, a relay communication method is provided in the embodiment, in which the method is executed by the base station, and includes the following step.

In step 341, the user plane security protection of the Uu interface is activated based on the security policy information.

Here, the user plane security protection includes the integrity protection and the encryption.

It should be noted that those skilled in the art can understand that the method provided in this embodiment of the present disclosure can be executed separately or together with some methods in the embodiments of the present disclosure or some methods in the related art.

As shown in Fig. 35, a relay communication method is provided in the embodiment, in which the method is executed by the base station, and includes the following step.

In step 351, the message indicating the user plane security activation status of the Uu interface is sent to the first terminal.

In an embodiment, the base station can receive the security policy information sent by the second network node and activate the user plane security protection of the Uu interface based on the security policy information. The message indicating the user plane security activation status of the Uu interface is sent to the first terminal.

It should be noted that those skilled in the art can understand that the method provided in these embodiments of the present disclosure can be executed separately or together with some methods in the embodiments of the present disclosure or some methods in the related art.

As shown in Fig. 36, a relay communication method is provided in the embodiment, in which the method is executed by the base station, and includes the following step.

In step 361, the response message indicating the error sent by the first terminal is received, in which the response message indicating the error is configured to indicate that the user plane security activation status of the Uu interface does not match with the security policy indicated by the security policy information.

In an embodiment, the base station sends the message indicating the user plane security activation status of the Uu interface to the first terminal. After receiving the message indicating the user plane security activation status of the Uu interface sent from the base station, the first terminal determines whether the user plane security activation status of the Uu interface matches with the security policy indicated by the security policy information provided by the first network node. The user plane security protection of the Uu interface and/or the PC5 interface is activated, in response to that the user plane security activation status of the Uu interface matches with the security policy indicated by the security policy information provided by the first network node. Or, the response message indicating the error is sent to the base station, in response to that the user plane security activation status of the Uu interface does not match with the security policy information.

It should be noted that those skilled in the art can understand that the method provided in these embodiments of the present disclosure can be executed separately or together with some methods in the embodiments of the present disclosure or some methods in the related art.

In order to better understand the embodiments of the present disclosure, the technical solution of the present disclosure will be further illustrated by two following illustrative embodiments.

### Example 1:

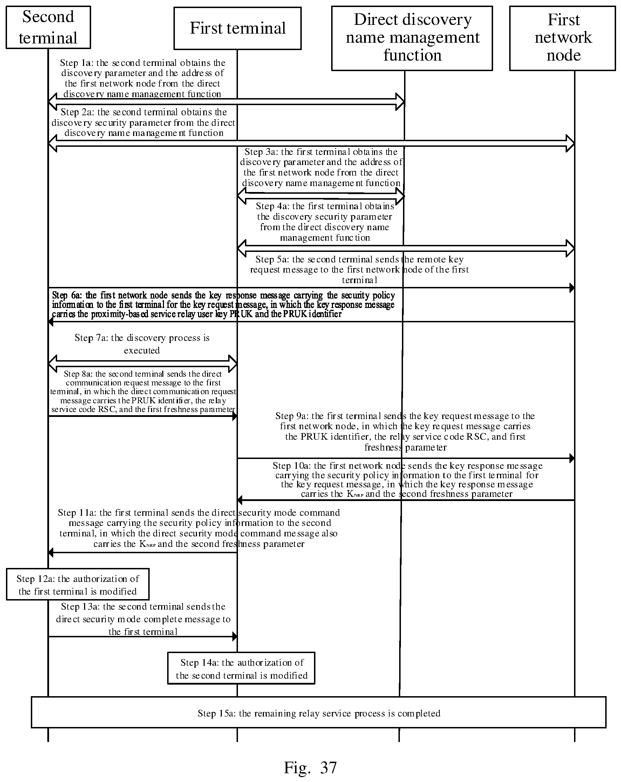

Referring to Fig. 37, a relay communication method is provided in the embodiment, and includes the following steps.

In step 1a, the second terminal obtains the discovery parameter and the address of the first network node from the direct discovery name management function.

In step 2a, the second terminal obtains the discovery security parameter from the direct discovery name management function.

In step 3a, the first terminal obtains the discovery parameter and the address of the first network node from the direct discovery name management function.

In step 4a, the first terminal obtains the discovery security parameter from the direct discovery name management function.

In step 5a, the second terminal sends the remote key request message to the first network node of the first terminal.

In step 6a, the first network node sends the key response message carrying the security policy information to the first terminal for the key request message, in which the key response message carries the proximity-based service relay user key (PRUK) and/or the PRUK identifier.

In step 7a, the discovery process is executed.

In step 8a, the second terminal sends the direct communication request message to the first terminal, in which the direct communication request message carries the PRUK identifier, the relay service code RSC, and the first freshness parameter.

In step 9a, the first terminal sends the key request message to the first network node, in which the key request message carries the PRUK identifier, the relay service code RSC, and the first freshness parameter.

In step 10a, the first network node sends the key response message carrying the security policy information to the first terminal for the key request message, in which the key response message carries the K_{NRP} and the second freshness parameter. Here, it may be that the 5G PKMF checks whether the U2N relay (which can be the first terminal) is authorized to act as the relay for the remote UE (which can be the second terminal) after the first network node (which can be the PKMF) receives the key request message. If the U2N relay is authorized to provide the relay service, the 5G PKMF generates the second freshness parameter and exports the K_{NRP}. Meanwhile, the 5G PKMF selects the PC5 UP security policy for the relay service according to the received RSC and a configuration list of the PC5 UP security policies of all relay services supported by the RSC. Then, the PKMF sends the key response message containing the K_{NRP}, the freshness parameter 2 (the second freshness parameter), and the PC5 UP security policy of the requested relay service to the U2N relay. Thus, the U2N relay is configured with the PC5 UP security policy of the relay service.

In step 11a, the first terminal sends the direct security mode command message carrying the security policy information to the second terminal, in which the direct security mode command message also carries the K_{NRP} and the second freshness parameter. Here, it may be that the U2N relay sends the direct security mode command message to the remote UE, in which the direct security mode command message includes the K_{NRP}, the K_{NRP} freshness parameter 2, and the PC5 UP security policy of the requested relay service. The direct security mode command message uses the session key KNRP-SESS originating from the K_{NRP} for the integrity protection, and thus the PC5 UP security policy of the requested relay service is protected through a PC5 link.

In step 12a, the authorization of the first terminal is modified. Here, it may be that the remote UE exports the K_{NRP} and the session key KNRP-SESS in the same way as the U2N relay, and processes the direct security mode command. Then, the remote UE verifies the integrity of the direct security mode command message. If successful, it is ensured to the remote UE that the U2N relay is authorized to provide the relay service. Then, the remote UE stores the PC5 user plane security policy of the relay service received from the U2N relay.

In step 13a, the second terminal sends the direct security mode complete message to the first terminal. Here, it may be that the remote UE responses to the U2N relay in the direct security mode completing message. The direct security mode complete message is encrypted and protected for integrity.

In step 14a, the authorization of the second terminal is modified. Here, it may be that the U2N relay verifies the integrity of the direct security mode complete message when receiving and processing the direct security mode complete message. If successful, the U2N relay ensures that the remote UE is authorized to obtain the relay service.

In step 15a, the remaining relay service process is completed. Here, it can be that the remote UE and the U2N relay continue the remaining process of the relay service through the security PC5 link.

### Example 2:

After determining that the remote UE (corresponding to the second terminal) has successfully verified the direct security mode complete message from the remote UE and is authorized to obtain the relay service, the U2N relay (corresponding to the first terminal) initiates a new process of establishing the session of the PDU to the SMF.

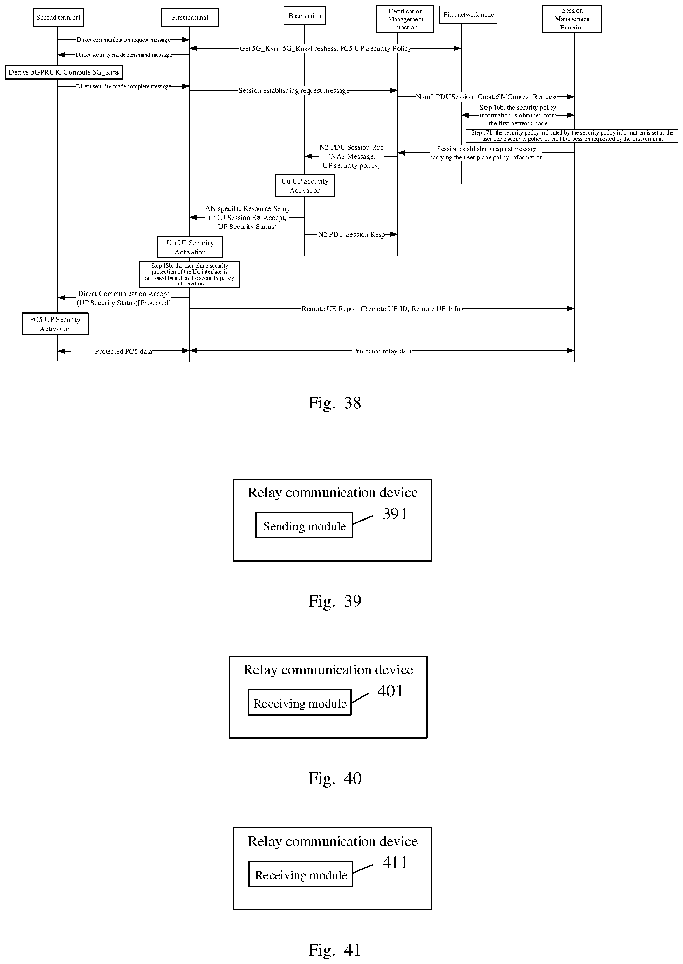

Referring to Fig. 38, a relay communication method is provided in the embodiment, and includes the following steps.

In step 1b, the security policy information is obtained from the first network node. Here, it may be that the SMF (corresponding to the second network node) obtains the UP security policy of the U2N relay service from the 5G PKMF.

In step 2b, the security policy indicated by the security policy information is set as the user plane security policy of the session of the PDU requested by the first terminal. Here, it may be that the SMF sets the UP security policy of the relay service as the UP security policy of the requested PDU session, and provides the UP security policy to the NG-RAN.

In step 3b, the user plane security protection of the Uu interface is activated based on the security policy information. Here, it may be that the U2N relay checks whether the received Uu UP security activation status matches with the PC5 UP security policy provided by the 5G PKMF. If the received Uu UP security activation status matches with the PC5 UP security policy provided by the 5G PKMF, the U2N relay activates the UP security of the PC5 interface and the Uu interface of the U2N relay. If the received Uu UP security activation status does not match with the PC5 UP security policy provided by the 5G PKMF, the U2N relay returns the error message to the NG-RAN.

It should be noted that the method can also include that the U2N relay sends the direct communication accept message to the remote UE, accepting the establishment of the PC5 connection, including the PC5 UP security activation status thereof. The entire message is subject to the PC5 signaling security protection, so that the PC5 UP security activation indication sent from the relay is protected. Meanwhile, the U2N relay sends the remote UE report to the SMF of the U2N relay.

The method can also include that the remote UE checks whether the received PC5 UP security activation status matches with the PC5 UP security policy provided by the 5G PKMF. If the received PC5 UP security activation status matches with the PC5 UP security policy provided by the 5G PKMF, the remote UE activates the PC5 UP security thereof. If the received PC5 UP security activation status does not match with the PC5 UP security policy provided by the 5G PKMF, the remote UE returns the error message to the U2N relay.

The method can also include that the service data relayed between the remote UE and the network through the PC5 link and the Uu link is sent under protection according to the UP security policy of the relay service.

It should be noted that the example 1 and the example 2 can be executed in combination.

As shown in Fig. 39, a relay communication device is provided in the embodiment of the present disclosure, in which the device includes a sending module 391 for sending security policy information to a first terminal.

The security policy information is at least configured for the user plane security protection of the relay service data transmitted between the first terminal and a second terminal based on the PC5 when the second terminal performs the relay communication with the network through the first terminal.

It should be noted that those skilled in the art can understand that the method provided in this embodiment of the present disclosure can be executed separately or together with some methods in the embodiments of the present disclosure or some methods in the related art.

As shown in Fig. 40, a relay communication device is provided in the embodiment of the present disclosure, in which the device includes a receiving module 401 for receiving the security policy information sent by the first terminal.

The security policy information is at least configured for the user plane security protection of the relay service data transmitted between the first terminal and the second terminal based on the PC5 when the second terminal performs the relay communication with the network through the first terminal.

It should be noted that those skilled in the art can understand that the method provided in this embodiment of the present disclosure can be executed separately or together with some methods in the embodiments of the present disclosure or some methods in the related art.

As shown in Fig. 41, a relay communication device is provided in the embodiment of the present disclosure, in which the device includes a receiving module 411 for receiving the security policy information sent by the first terminal.

The security policy information is at least configured for the user plane security protection of the relay service data transmitted between the first terminal and the second terminal based on the PC5 when the second terminal performs the relay communication with the network through the first terminal.

It should be noted that those skilled in the art can understand that the method provided in this embodiment of the present disclosure can be executed separately or together with some methods in the embodiments of the present disclosure or some methods in the related art.

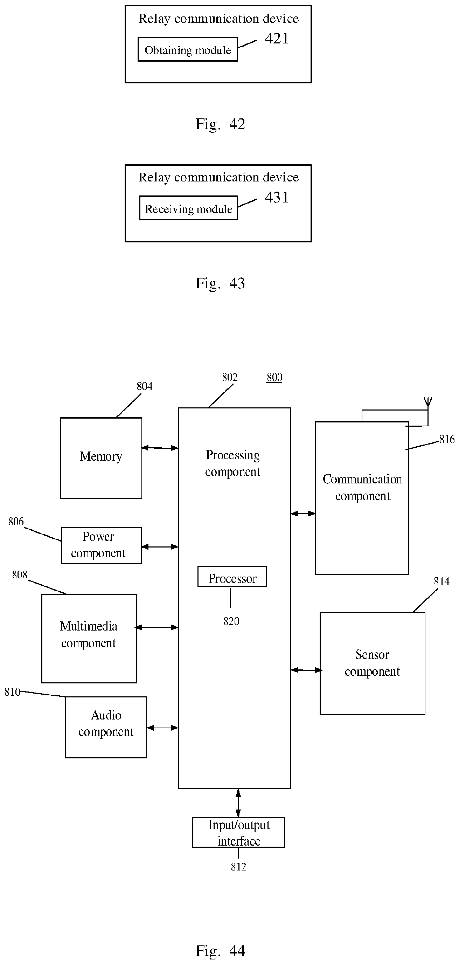

As shown in Fig. 42, a relay communication device is provided in the embodiment of the present disclosure, in which the device includes a obtaining module 421 for obtaining the security policy information from a first network node.

The security policy information is at least configured for the user plane security protection of the relay service data transmitted between the first terminal and the second terminal based on the PC5 when the second terminal performs the relay communication with the network through the first terminal.

It should be noted that those skilled in the art can understand that the method provided in this embodiment of the present disclosure can be executed separately or together with some methods in the embodiments of the present disclosure or some methods in the related art.

As shown in Fig. 43, a relay communication device is provided in the embodiment of the present disclosure, in which the device includes a receiving module 431 for receiving the security policy information sent by a second network node.

The security policy information is at least configured for the user plane security protection of the relay service data transmitted between the first terminal and the second terminal based on the PC5 when the second terminal performs the relay communication with the network through the first terminal.

It should be noted that those skilled in the art can understand that the method provided in this embodiment of the present disclosure can be executed separately or together with some methods in the embodiments of the present disclosure or some methods in the related art.

A communication apparatus is provided in embodiments of the present disclosure, and the communication apparatus includes: a processor; and a memory for storing instructions executable by the processor.

The processor is configured to implement the method applied to any embodiment of the present disclosure when running the executable instructions.

The processor can include various types of storage medium, the storage medium is non-temporary computer storage medium that can continue to remember the information stored thereon after power failure of the communication apparatus.

The processor can be connected to the memory via a bus, in order to read an executable program stored on the memory.

A computer storage medium is provided in embodiments of the present disclosure, in which the computer storage medium stores a computer executable program that, when executed by the processor, implements the method according to any embodiment of the present disclosure.

Regarding the devices in the above embodiments, the specific way in which each module executes the operation has been described in detail in the embodiments related to the method, and will not be detailed here.

As shown in Fig. 44, a structure of a terminal is provided in an embodiment of the present disclosure.

Referring to a terminal 800 shown in Fig. 44, the terminal 800 is provided in the embodiment, and can specifically be a mobile phone, a computer, a digital broadcasting terminal, a message sending and receiving apparatus, a game console, a tablet apparatus, a medical apparatus, a fitness apparatus, a personal digital assistant, etc.

Referring to Fig. 44, the terminal 800 can include one or more of following components: a processing component 802, a memory 804, a power component 806, a multimedia component 808, an audio component 810, an input/output (I/O) interface 812, a sensor component 814 and a communication component 816.

The processing component 802 typically controls the overall operation of the terminal 800, such as operations associated with display, telephone calls, data communication, camera operations, and recording operations. The processing component 802 can include one or more processors 820 to execute instructions to complete all or part of the steps of the above method. In addition, the processing component 802 can include one or more modules to facilitate the interaction between the processing component 802 and other components. For example, the processing component 802 can include a multimedia module to facilitate interaction between the multimedia component 808 and the processing component 802.

The memory 804 is configured to store various types of data to support operations on the apparatus 800. Examples of these data include instructions for any application program or method operated on the terminal 800, contact data, phone book data, messages, images, videos, etc. The memory 804 can be implemented by any type of volatile or non-volatile storage apparatus or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disc.

The power component 806 provides power to various components of the terminal 800. The power component 806 can include a power management system, at least one power supply, and other components associated with generating, managing, and distributing power for the terminal 800.

The multimedia component 808 includes a screen providing an output interface between the terminal 800 and a user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, slides and gestures on the touch panel. The touch sensor can not only sense the boundaries of the touch or slide action, but also detect the duration and pressure associated with the touch or slide operation. In some embodiments, the multimedia component 808 includes a front camera and/or a rear camera. The front camera and/or the rear camera can receive external multimedia data when the apparatus 800 is in an operating mode, such as a shooting mode or a video mode. Each front camera and rear camera can be a fixed optical lens system or have a focal length and an optical zoom capability.

The audio component 810 is configured to output and/or input audio signals. For example, the audio component 810 includes a microphone (MIC) that is configured to receive external audio signals when the terminal 800 is in the operating mode, such as a call mode, a recording mode, and a speech recognition mode. The received audio signals can be further stored in the memory 804 or transmitted through the communication component 816. In some embodiments, the audio component 810 further includes a speaker for outputting the audio signals.

The input/output (I/O) interface 812 provides an interface between the processing component 802 and a peripheral interface module, the peripheral interface module can be a keypad, a click wheel, a button, and the like. These buttons can include, but are not limited to, a home button, a volume button, a start button, and a lock button.

The sensor component 814 includes one or more sensors for providing state assessments of various aspects for the terminal 800. For example, the sensor component 814 can detect the on/off state of the apparatus 800, the relative positioning of components, such as a display and a keypad of the terminal 800. The sensor component 814 can also detect the position change of the terminal 800 or a component of the terminal 800, the presence or absence of user contact with the terminal 800, the orientation or acceleration/deceleration of the terminal 800 and the temperature change of the terminal 800. The sensor component 814 can include a proximity sensor configured to detect the presence of a nearby object without any physical contact. The sensor component 814 can also include an optical sensor, such as a CMOS or CCD image sensor, for use in imaging applications. In some embodiments, the sensor component 814 can also include an acceleration sensor, a gyroscope sensor, a magnetic sensor, a pressure sensor, or a temperature sensor.

The communication component 816 is configured to facilitate wired or wireless communication between the terminal 800 and other apparatuses. The terminal 800 can access to a wireless network based on a communication standard, such as Wi-Fi, 2G or 3G, or a combination thereof. In an embodiment, the communication component 816 receives broadcast signals or broadcast-related information from an external broadcast management system via a broadcast channel. In an embodiment, the communication component 816 further includes a near field communication (NFC) module to facilitate short range communication. For example, NFC modules can be implemented based on Radio Frequency Identification (RFID) technology, Infrared Data Association (IrDA) technology, Ultra Wide Band (UWB) technology, Bluetooth (BT) technology and other technologies.

In an embodiment, the terminal 800 can be implemented by at least one application specific integrated circuit (ASIC), digital signal processor (DSP), digital signal processing device (DSPD), programmable logic device (PLD), field programmable gate array (FPGA), controller, microcontroller, microprocessor, or another electronic element, for executing the above methods.

In embodiments, there is also provided a non-transitory computer-readable storage medium including instructions, such as the memory 804 including instructions, and the instructions can be executed by the processor 820 of the terminal 800 to complete the above methods. For example, the non-transitory computer-readable storage medium can be a ROM, a random access memory (RAM), a CD-ROM, a magnetic tape, a floppy disk, and an optical data storage apparatus, etc.

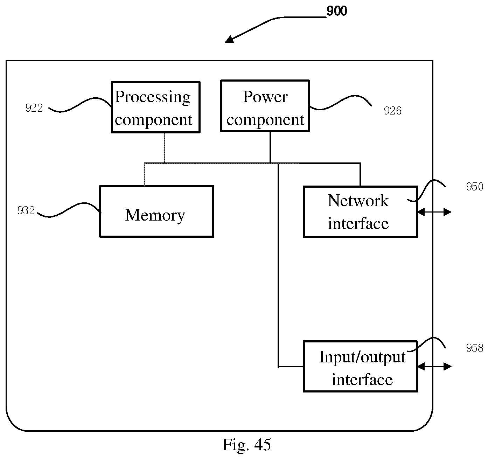

As shown in Fig. 45, a structure of the base station is provided in an embodiment of the present disclosure. For example, a base station 900 can be provided as a network side apparatus. Referring to Fig. 45, the base station 900 includes a processing component 922, which further includes one or more processors and a memory resource represented by a memory 932, for storing instructions, such as the application program, that can be executed by the processing component 922. The application program stored in the memory 932 can include one or more modules, each of which corresponds to a set of instructions. In addition, the processing component 922 is configured to execute the instructions to execute any of the above methods applied to the base station.

The base station 900 can also include a power component 926 configured to execute the power management of the base station 900, a wired or wireless network interface 950 configured to connect the base station 900 to the network, and an input output (I/O) interface 958. The base station 900 can operate an operating system stored in the memory 932, such as Windows Server TM, Mac OS XTM, UnixTM, LinuxTM, FreeBSDTM, or the like.

Other embodiments of the present disclosure will easily occur to those skilled in the art after considering the specification and practicing the present disclosure disclosed herein. This application is intended to cover any variations, uses or adaptations of the present disclosure, which follow the general principles of the present disclosure and include common sense or common technical means in this technical field that are not disclosed in the present disclosure. The specification and embodiments are only considered illustrative, and the true scope and spirit of the present disclosure are indicated by the following claims.

It should be understood that the present disclosure is not limited to the precise structures described above and shown in the drawings, and various modifications and changes can be made without departing from its scope. The scope of the present disclosure is limited only by the scope of the appended claims.

## Claims

1. A relay communication method, executed by a first network node, and comprising:
sending security policy information to a first terminal,
wherein the security policy information is at least configured for a user plane security protection of relay service data transmitted between the first terminal and a second terminal based on a PC5 when the second terminal performs a relay communication with a network through the first terminal.

2. The relay communication method according to claim 1, further comprising:
receiving a relay service code RSC sent by the first terminal; and
determining the security policy information based on the RSC and a mapping relationship between the RSC and a security policy, in response to determining that the first terminal is authorized to provide a relay service.

3. The relay communication method according to claim 2, wherein receiving the relay service code RSC sent by the first terminal comprises:
receiving a key request message carrying the RSC sent by the first terminal.

4. The relay communication method according to claim 3, wherein the key request message further carries a PRUK identifier and/or a first freshness parameter.

5. The relay communication method according to claim 3, wherein sending the security policy information to the first terminal comprises:
sending a key response message carrying the security policy information to the first terminal for the key request message.

6. The relay communication method according to claim 5, wherein the key response message further carries a K_{NRP} and/or a second freshness parameter, and the K_{NRP} is configured to generate a session key.

7. The relay communication method according to claim 1, further comprising:
receiving a remote user key request message sent by the second terminal.

8. The relay communication method according to claim 7, further comprising:
determining whether the second terminal is authorized to receive a relay service; and
sending a proximity-based service relay user key PRUK and/or a PRUK identifier to the second terminal, in response to that the second terminal is authorized to receive the relay service.

9. A relay communication method, executed by a first terminal, and comprising:
receiving security policy information sent by a first network node,
wherein the security policy information is at least configured for a user plane security protection of relay service data transmitted between the first terminal and a second terminal based on a PC5 when the second terminal performs a relay communication with a network through the first terminal.

10. The relay communication method according to claim 9, further comprising:
receiving a RSC sent by the second terminal,
wherein the RSC is configured for the first network node to determine the security policy information.

11. The relay communication method according to claim 10, wherein receiving the RSC sent by the second terminal comprises:
receiving a direct communication request message carrying the RSC sent by the second terminal.

12. The relay communication method according to claim 11, wherein the direct communication request message further carries a PRUK identifier and/or a first freshness parameter.

13. The relay communication method according to claim 10, further comprising:
sending the RSC to the first network node.

14. The relay communication method according to claim 13, wherein sending the RSC to the first network node comprises:
sending a key request message carrying the RSC to the first network node.

15. The relay communication method according to claim 14, wherein the key request message further carries a PRUK identifier and/or a first freshness parameter.

16. The relay communication method according to claim 15, wherein receiving the security policy information sent by the first network node comprises:
receiving a key response message carrying the security policy information sent by the first network node.

17. The relay communication method according to claim 16, wherein the key response message further carries a K_{NRP} and/or a second freshness parameter, and the K_{NRP} is configured to generate a session key.

18. The relay communication method according to claim 9, further comprising:
sending the security policy information to the second terminal.

19. The relay communication method according to claim 18, wherein sending the security policy information to the second terminal comprises:
sending a direct security mode command message carrying the security policy information to the second terminal.

20. The relay communication method according to claim 19, wherein the direct security mode command message further carries a K_{NRP} and/or a second freshness parameter, and the K_{NRP} is configured to generate a session key.

21. The relay communication method according to claim 19, wherein an integrity protection of the security mode command message is performed through a session key generated based on a K_{NRP}.

22. The relay communication method according to claim 19, further comprising:
receiving a direct security mode complete message sent by the second terminal.

23. The relay communication method according to claim 9, further comprising:
receiving a message sent by a base station and indicating a user plane security activation status of a Uu interface.

24. The relay communication method according to claim 23, further comprising:
determining whether the user plane security activation status of the Uu interface matches with a security policy indicated by the security policy information provided by the first network node; and
activating a user plane security protection of the Uu interface and/or a PC5 interface in response to that the user plane security activation status of the Uu interface matches with the security policy indicated by the security policy information provided by the first network node; or, sending a response message indicating an error to the base station in response to that the user plane security activation status of the Uu interface does not match with the security policy information.

25. The relay communication method according to claim 9, further comprising:
sending a direct communication accept message to the second terminal, wherein the direct communication accept message carries a user plane security activation status of a PC5 interface.

26. The relay communication method according to claim 25, further comprising:
receiving a response message indicating an error from the second terminal, wherein the response message indicating the error is configured to indicate that the user plane security activation status of the PC5 interface does not match with a security policy indicated by the security policy information.

27. The relay communication method according to claim 9, further comprising:
sending a request message for initiating a process of establishing a session of a protocol data unit PDU to a second network node, in response to receiving a direct security mode complete message.

28. The relay communication method according to claim 9, further comprising:
obtaining at least one of the following information from the first network node: a discovery parameter, an address of the first network node, and a discovery security parameter.

29. A relay communication method, executed by a second terminal, and comprising:
receiving security policy information sent by a first terminal,
wherein the security policy information is at least configured for a user plane security protection of relay service data transmitted between the first terminal and the second terminal based on a PC5 when the second terminal performs a relay communication with a network through the first terminal.

30. The relay communication method according to claim 29, further comprising:
sending a RSC to the first terminal,
wherein the RSC is configured for a first network node to determine the security policy information.

31. The relay communication method according to claim 30, wherein sending the RSC to the first terminal comprises:
sending a direct communication request message carrying the RSC to the first terminal.

32. The relay communication method according to claim 31, wherein the direct communication request message further carries a PRUK identifier and/or a first freshness parameter.

33. The relay communication method according to claim 29, wherein receiving the security policy information sent by the first terminal comprises:
receiving a direct security mode command message carrying the security policy information sent by the first terminal.

34. The relay communication method according to claim 33, wherein the direct security mode command message further carries a K_{NRP} and/or a second freshness parameter.

35. The relay communication method according to claim 34, wherein an integrity protection of the direct security mode command message is performed through a session key generated based on the K_{NRP}.

36. The relay communication method according to claim 35, further comprising:
executing an integrity verification of the direct security mode command message; and
determining that the first terminal is authorized to provide a relay service, in response to a successful integrity verification.

37. The relay communication method according to claim 36, further comprising:
sending a direct security mode complete message to the first terminal, in response to the successful integrity verification.

38. The relay communication method according to claim 29, further comprising:
receiving a direct communication accept message sent by the first terminal, wherein the direct communication accept message carries a user plane security activation status of a PC5 interface.

39. The relay communication method according to claim 38, further comprising:
determining whether the user plane security activation status of the PC5 interface matches with a security policy indicated by the security policy information; and
activating a user plane security protection of the PC5 interface in response to that the user plane security activation status of the PC5 interface matches with the security policy indicated by the security policy information; or, sending a response message indicating an error to the first terminal in response to that the user plane security activation status of the PC5 interface does not match with the security policy indicated by the security policy information.

40. The relay communication method according to claim 29, further comprising:
sending a remote user key request message to a first network node of the first terminal.

41. The relay communication method according to claim 40, further comprising:
receiving a PRUK and/or a PRUK identifier sent by the first network node for the remote user key request message.

42. The relay communication method according to claim 29, further comprising:
obtaining at least one of the following information from a first network node: a discovery parameter, an address of the first network node, and a discovery security parameter.

43. A relay communication method, executed by a second network node, and comprising:
obtaining security policy information from a first network node,
wherein the security policy information is at least configured for a user plane security protection of relay service data transmitted between a first terminal and a second terminal based on a PC5 when the second terminal performs a relay communication with a network through the first terminal.

44. The relay communication method according to claim 43, wherein obtaining the security policy information from the first network node comprises:
obtaining the security policy information from the first network node, in response to receiving a request message sent by the first terminal and for initiating a process of establishing a session of a protocol data unit PDU.

45. The relay communication method according to claim 43, further comprising:
setting a security policy indicated by the security policy information as a user plane security policy of the session of the PDU requested by the first terminal.

46. The relay communication method according to claim 45, further comprising:
sending the security policy information to a base station.

47. A relay communication method, executed by a base station, and comprising:
receiving a security policy information sent by a second network node,
wherein the security policy information is at least configured for a user plane security protection of relay service data transmitted between a first terminal and a second terminal based on a PC5 when the second terminal performs a relay communication with a network through the first terminal.

48. The relay communication method according to claim 47, further comprising:
activating a user plane security protection of a Uu interface based on the security policy information.

49. The relay communication method according to claim 48, further comprising:
sending a message indicating a user plane security activation status of the Uu interface to the first terminal.

50. The relay communication method according to claim 49, further comprising:
receiving a response message indicating an error sent by the first terminal, wherein the response message indicating the error is configured to indicate the user plane security activation status of the Uu interface does not match with a security policy indicated by the security policy information.

51. A relay communication device, comprising:
a sending module for sending security policy information to a first terminal,
wherein the security policy information is at least configured for a user plane security protection of relay service data transmitted between the first terminal and a second terminal based on a PC5 when the second terminal performs a relay communication with a network through the first terminal.

52. A relay communication device, comprising:
a receiving module for receiving security policy information sent by a first network node,
wherein the security policy information is at least configured for a user plane security protection of relay service data transmitted between a first terminal and a second terminal based on a PC5 when the second terminal performs a relay communication with a network through the first terminal.

53. A relay communication device, comprising:
a receiving module for receiving security policy information sent by a first terminal,
wherein the security policy information is at least configured for a user plane security protection of relay service data transmitted between the first terminal and a second terminal based on a PC5 when the second terminal performs a relay communication with a network through the first terminal.

54. A relay communication device, comprising:
an obtaining module for obtaining security policy information from a first network node,
wherein the security policy information is at least configured for a user plane security protection of relay service data transmitted between a first terminal and a second terminal based on a PC5 when the second terminal performs a relay communication with a network through the first terminal.

55. A relay communication device, comprising:
a receiving module for receiving security policy information sent by a second network node,
wherein the security policy information is at least configured for a user plane security protection of relay service data transmitted between a first terminal and a second terminal based on a PC5 when the second terminal performs a relay communication with a network through the first terminal.

56. A communication apparatus, comprising:
a memory; and
a processor connected to the memory, and configured to implement the method according to any one of claims 1-8, 9-28, 29-42, 43-46, or 47-50 through running an computer executable instructions stored in the memory.

57. A computer storage medium storing a computer executable instructions which, when executed by a processor, implements the method according to any one of claims 1-8, 9-28, 29-42, 43-46, or 47-50.
